(19) **Europäisches Patentamt / European Patent Office / Office européen des brevets**

(11) **EP 1 646 534 B1**

(12) **EUROPÄISCHE PATENTSCHRIFT**

(45) Veröffentlichungstag und Bekanntmachung des Hinweises auf die Patenterteilung:
**08.07.2009 Patentblatt 2009/28**

(21) Anmeldenummer: **04740999.0**

(22) Anmeldetag: **14.07.2004**

(51) Int Cl.:
**B60R 19/48** (2006.01)

(86) Internationale Anmeldenummer:
**PCT/EP2004/007786**

(87) Internationale Veröffentlichungsnummer:
**WO 2005/012044 (10.02.2005 Gazette 2005/06)**

(54) **BEFESTIGUNSSYSTEM FÜR EINE SENSORANORDNUNG IN EINEM STOSSFÄNGER FÜR KRAFTFAHRZEUGE**

FASTENING SYSTEM FOR A SENSOR ARRAY IN A SHOCK ABSORBER OF MOTOR VEHICLES

SYSTEME DE FIXATION D'UN DISPOSITIF DETECTEUR DANS UN PARE-CHOCS DE VEHICULES AUTOMOBILES

(84) Benannte Vertragsstaaten:
**AT BE BG CH CY CZ DE DK EE ES FI FR GB GR HU IE IT LI LU MC NL PL PT RO SE SI SK TR**

(30) Priorität: **23.07.2003 DE 10333735**

(43) Veröffentlichungstag der Anmeldung:
**19.04.2006 Patentblatt 2006/16**

(73) Patentinhaber: **PEGUFORM GMBH**
**79268 Bötzingen (DE)**

(72) Erfinder:
• **BOEHEIM, Johannes**
**73102 Birenbach (DE)**
• **HILGENBERG, Stefan**
**331021 Paderborn (DE)**
• **FISCHER, Jochem**
**73760 Ostfildern (DE)**
• **HOFFMANN, Jörg**
**66636 Theley (DE)**
• **SCHERF, Oliver**
**63856 Bessenbach (DE)**

(74) Vertreter: **Neunert, Peter Andreas**
**Patentanwälte**
**Westphal, Mussgnug & Partner**
**Am Riettor 5**
**78048 Villingen-Schwenningen (DE)**

(56) Entgegenhaltungen:
EP-A- 1 083 099           WO-A- 02/084875
DE-C- 490 463             GB-A- 2 041 606
GB-A- 2 376 075           US-B1- 6 561 301

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Schutzvorrichtung für Fußgänger und Zweiradfahrer für ein Fahrzeug, welches ausgerüstet ist, die Rahmenbedingungen eines Objektanpralls zu erkennen, festzustellen, um welches Objekt es sich handelt, das den Aufprall verursacht, und bei positiver Erkennung, dass ein Verkehrsteilnehmer, wie ein Fußgänger oder Zweiradfahrer die Ursache des Aufpralls ist, gezielt auf diesen Aufprall zu reagieren. Jeder Aufprall im Frontbereich des Fahrzeugs erzeugt eine charakteristische Deformation am Ort des Aufpralls. Aus der durch das aufprallende Objekt bewirkten Deformation wird eine Deformationsarbeit ermittelt, wobei die Mittel zum Auswerten unter Berücksichtigung von Zeitinformation, die von Sensoren erfasst wird, eine Geschwindigkeit des Eindringens des Objekts ermitteln können und unter Berücksichtigung der Deformationsarbeit und der Eindringgeschwindigkeit ein die Masse des Objekts kennzeichnender Parameter ermittelt wird. Im Rahmen des erfindungsgemäßen Systems geht man davon aus, dass die gesamte kinetische Energie, die sich aus der Relativgeschwindigkeit von Objekt und Fahrzeug und aus der Objektmasse ergibt, in Deformationsarbeit umgewandelt wird. Kennt man diese Deformationsarbeit auf der Grundlage der Auswertung der Signale der Sensoren und weiterhin die Eindringgeschwindigkeit des Objekts, so ermittelt man aus diesen Ausgangsgrößen einen Kennwert für die Masse des Objekts. Damit liegt ein zuverlässiges Kriterium für das Auslösen einer Vorrichtung zum Schutz des Fußgängers oder Zweiradfahrers vor.

Mit dem Kennwert für die Masse lässt sich die Deformationsarbeit auf der Grundlage einer gespeicherten Tabelle oder einer Berechnung ermitteln. Die Tabelle stellt unterschiedliche Deformationsmuster mit der durch den Aufprall auf Teile der Front- oder Seitenverkleidung des Fahrzeugs eingebrachten Deformationsarbeit in Beziehung. Wenn das Deformationsmuster bekannt ist, ergibt sich die Deformationsarbeit als eine der Ausgangsgrößen.

Die Masse steht mit der Deformationsarbeit in folgender Beziehung:

$$m_0 = k \cdot \frac{W_{def}}{v_0^2}$$

wobei

$m_0$ : Masse,
$W_{Def}$ : Deformationsarbeit,
$V_0$ : Eindringgeschwindigkeit,
$k$ : Konstante.

Diese Beziehung ergibt sich aus der Energiebilanz des Aufpralls, wobei man davon ausgeht, dass die gesamte kinetische Energie des Aufpralls vollständig in Deformationsarbeit umgesetzt wird.

Die Masse des Objekts ist mittels des kennzeichnenden Parameters als effektive Masse nach der Beziehung berechenbar, wobei

$$m_{eff} = f_{dyn} \times m_0$$

$m_0$ : Masse,
$m_{eff}$ : effektive Masse,
$f_{dyn}$ : Dynamikfaktor.

Durch einen solchen Dynamikfaktor wird berücksichtigt, dass die kinetische Energie nicht ausschließlich in Form von Deformationsarbeit an der Außenverkleidung des Fahrzeugs umgesetzt wird, sondern dass beispielsweise das Bein eines Fußgängers, das auf die Außenverkleidung des Fahrzeugs mit der darunter liegenden Anordnung von Sensoren aufprallt, ebenfalls eine Deformation erfährt. In diesem Sinne ist der Dynamikfaktor ein Korrekturterm, der die realen Verhältnisse beim Aufprall berücksichtigt.

Zur Ermittlung eines Kennwertes für die Masse werden somit Sensoren auf der Frontseite eines Fahrzeugs vorgesehen, welche die Deformationen des Bereichs der Frontseite des Fahrzeugs registrieren, welcher einem Aufprall ausgesetzt ist.

Bei diesen Sensoren handelt es sich insbesondere um optische Fasersensoren, an deren einem Ende Licht eingekoppelt werden kann und an deren anderem Ende die Intensität von austretendem Licht gemessen werden kann.

Ein optischer Fasersensor enthält sensitive Bereiche, die definiert in die umhüllende Reflexionsschicht eingebracht werden. In Abhängigkeit der Biegung der sensitiven Bereiche aufgrund der durch den Objektanprall verursachten Deformation kann mehr oder weniger Licht aus den sensitiven Bereichen ausgekoppelt werden, so dass die gemessene Intensität von austretendem Licht als Maß für die Deformation der sensitiven Bereiche verwendet werden kann. Derartige Sensoren, beispielsweise aus Polymethylmethacrylat (PMMA), eignen sich aus mehreren Gründen besonders für die Realisierung der vorliegenden Erfindung. Die optischen Fasersensoren sind flexibel, leicht, mechanisch belastbar und weitgehend unempfindlich gegenüber Temperaturschwankungen. Probleme im Hinblick auf die elektromagnetische Verträglichkeit ergeben sich aufgrund der Verwendung von Strahlung im Wellenlängenbereich des sichtbaren Lichts nicht.

Somit werden an die Befestigung der Sensoren auf der Frontseite des Fahrzeugs spezielle Anforderungen gestellt. Sie müssen derart in das Frontendsystem integriert werden, dass sie ihrer Funktionsweise gerecht werden und dass gleichzeitig eine Zerstörung des Sensors verhindert wird. Zur Erfüllung ihrer Funktion müssen die Sensoren die Deformation der Frontseite des Fahrzeugs im Fall eines Aufpralls mitmachen, ohne selbst Spannungen oder Druckbelastungen durch die Befestigung oder das den Sensor aufnehmende Gehäuse ausgesetzt zu sein.

Aus der Offenlegungsschrift DE10145679 A1 ist ein Sensorgehäuse bekannt, in welches ein richtungsabhängiger Sensor positionsgenau integriert wird.

Die Befestigung der Abdeckung des Sensors in dem Sensorgehäuse wird durch eine Schnappverbindung realisiert, wobei bei der Schnappverbindung eine definierte mechanische Vorspannung gewährleistet sein muss. Diese Lösung kommt ohne Fixierklebstoffe oder Vergussmassen aus. Das Sensorgehäuse und seine Abdeckung sind im einfachsten Fall Spritzgussteile. Die Sensoren sind Beschleunigungssensoren und Drehratensensoren, für welche ein richtungsabhängiger Einbau im Kraftfahrzeug erforderlich ist, da sie sonst inkorrekte Messsignale liefern. Das Gehäuse besteht aus Polybutylenterephtalat oder vergleichbaren Kunststoffen. Dieses Gehäuse ist zur Erfüllung seiner Funktion nicht selbst deformierbar, kann also für die Lösung des vorliegenden Problems nicht zum Einsatz kommen.

Eine andere Lösung wird in der Offenlegungsschrift DE 44 10 895 A1 vorgeschlagen. Der Sensor wird in eine Bohrung eines Stossfängers eingelegt, wobei die Außenbegrenzung des Sensors eine Membran ist, weil ein Ultraschallsensor eingesetzt werden soll, dessen Membran zur Erzeugung der Ultraschallsignale in Schwingungen versetzt werden muss. Als Abdeckung dient eine Folie oder dergleichen, welche den Stossfänger großflächig überzieht, sodass der Sensor an sich von außen nicht sichtbar ist und auch gegen Zerstörung oder Schmutz gesichert ist. Damit die Abdeckung mit der Membran des Sensors mitschwingen kann, muss sie aus einem Kunststoff hergestellt werden, welcher eine bestimmte Steifigkeit (Shore-Härte) aufweist.

Diese Lösungen eignen sich nicht zur Anwendung für Deformationssensoren, die naturgemäß in deformierbaren Teilen eines Frontbereichs eines Fahrzeugs angeordnet werden müssen. Die genaue Festlegung der Messrichtung spielt eine untergeordnete Rolle, von Bedeutung ist vielmehr, dass der Sensor die Deformationen des energieabsorbierenden Materials ähnlich wie ein Dehnmessstreifen messen kann. Gerade in dem Fall der in der DE 44 10 895 A1 offenbarten Lösung sollte es aber eben nicht zu einer Deformation des den Sensor umgebenden Gehäuses und der Membran kommen, da eine Deformation dieselben Auswirkungen auf die Frequenz der von der Membran erzeugten oder aufgenommenen Schwingungen hat, die das Messergebnis verfälschen.

Die in DE 101 13 720 A1 dargestellte Sensoranordnung misst die Schwere und Richtung eines Aufpralls durch Änderung des elektrischen Widerstandes zufolge Deformation. Dabei werden piezoelektrische Sensoren auf der Oberseite und

Unterseite eines Sensorbandes angebracht, wobei das die Sensoren auf der Oberseite und der Unterseite durch ein verformbares Material getrennt sind. Die Richtung des Aufpralls wird durch den Ort der Änderung des elektrischen Widerstandes bestimmt, die Schwere des Aufpralls daran gemessen, ob nur eine Sensorreihe auf der Oberseite des Sensorbandes oder ob beide Sensorreihen aktiviert werden. Die Sensoren auf der Unterseite des Sensorbandes sprechen erst an, wenn die Dämpfungswirkung des verformbaren Materials einen Schwellwert überschreitet. Somit wird die zeitliche Differenz (t) zwischen dem Aufprall auf der Oberseite und der Unterseite der im Abstand (d) im verformbaren Material angeordneten Sensorbänder ermittelt, wodurch die Intrusionsgeschwindigkeit v = d/t gefunden werden kann.

In DE 100 23 588 A1 wird eine Sensoranordnung offenbart, welche den Einsatz von Lichtleitern zur Erkennung der Intrusionsgeschwindigkeit, d.h. der Geschwindigkeit, mit der ein Objekt auf das Fahrzeug aufprallt, offenbart. Bei Verwendung mehrerer Lichtleiterschleifen unterschiedlicher Länge kann die Richtung des Objekts bestimmt werden, in welcher dieses in das Fahrzeug eindringt.

Mit dem in DE 100 85 023 T1 vorgestellten Sensor werden Ort des Aufpralls, Ausmaß des Aufpralls (z.B. Fahrzeugbreite, oder lokaler Aufprall auf einen Pol) und die Intrusionsgeschwindigkeit ermittelt. Der Sensor ist ein biegeempfindliches Widerstandselement, es kann sich auch um ein optisches Faserkabel handeln.

Es wird ausschließlich die Messung eines elektrischen Widerstandes beschrieben, welcher sich durch den Aufprall in charakteristischer Weise ändert. Von der Möglichkeit einer optischen Messung wird nicht Gebrauch gemacht. Der Sensor ist im energieabsorbierenden Teil eines Stossfängers angebracht, er kann auch in einem Gehäuse angebracht sein. Das in DE 100 85 023 T1 Befestigungssystem ist für einen faseroptischen Deformationssensor nicht geeignet, weil kein Dehnungsmuster erzeugt wird, welche Rückschluss über die Art des Aufpralls liefert, wozu der Sensor beweglich im energieabsorbierenden Teil angeordnet sein muss. Gemäß DE 100 85 023 T1 wird durch den Einbauort im energieabsorbierenden Teil jedoch nur die Signifikanz des Aufprallereignisses ermittelt, nicht jedoch der Typ des Aufprallereignisses.

Gemäß DE 100 85 025 T1 ist ein Verformungssensor im energieabsorbierenden Teil eines Stossfängers angebracht, und zwar in einem Gehäuse ähnlich wie DE 100 85 023 T1. Das Gehäuse ist zweiteilig aufgebaut, um die Montage des Sensors zu vereinfachen. Das Gehäuse kann ein zusammendrückbares Material enthalten, sodass ein eingeschlossener, bzw. umschlossener Verformungssensor sich, als Reaktion auf ein signifikantes Aufprallereignis, biegen und/oder verformen kann. Wie in dem vorhergehenden Dokument wird somit nur die Signifikanz des Aufprallereignisses ermittelt, nicht aber der Typ des Aufprallereignisses.

Die US 6,561,301 B1 offenbart ein Befestigungssystem mit einer im Frontbereich eines Fahrzeugs angeordneten Sensoranordnung zum Erfassen einer durch einen Aufprall eines Objekts auf das Fahrzeug bewirkten Deformation sowie Mitteln zum Auswerten der von Sensoren gelieferten Signale, sodass Informationen über die Charakteristik des Aufpralls geliefert werden können. Dabei ist die Sensoranordnung in ein energieabsorbierendes Teil integriert, sodass die Sensoranordnung die Deformation des energieabsorbierenden Teils aufnimmt, die während eines Aufpralls des Fahrzeugs auf ein Objekt entstehen. Der Nachteil dieser Anordnung besteht darin, dass der Sensor beim Aufprall selber in Mitleidenschaft gezogen und leicht zerstört werden kann. Es ist somit Aufgabe der vorliegenden Erfindung, ein Befestigungssystem für eine Sensoranordnung vorzusehen, welches die Nachteile des Standes der Technik nicht aufweist.

Es ist Aufgabe der Erfindung, eine Befestigung eines Sensors in einem Kraftfahrzeugteil vorzusehen, welches möglichst nahe der Vorderfront des Fahrzeugs liegt. Bei dem Sensor handelt es sich um einen Deformationssensor, welcher als faseroptischer Kontaktsensor ausgebildet ist.

Ein derartiger Deformationssensor muss seiner Natur nach in einem deformierbaren Teil des Fahrzeugs angebracht sein, also beispielsweise in deformierbaren und energieabsorbierenden Crashabsorbern. Jeder Deformationssensor nimmt die durch einen Aufprall entstehenden Deformationen auf und sendet ein Messsignal an eine Zentraleinheit, welche die Aufprallsituation mit einer Aufprallsituation mit einem Fußgänger oder Zweiradfahrer vergleicht, und entsprechende Sicherheitselemente im Fahrzeug aktivieren kann. Solche Sicherheitselemente umfassen Airbaglösungen, sich aufstellende Fronthauben oder Frontscheiben oder ausfahrbare Spoiler.

Somit muss der Sensor die am Fahrzeug entstehenden Deformationen verarbeiten und an die Zentraleinheit senden, bevor der der Deformation zugrundeliegende Aufprall zu Verletzungen des Fußgängers oder Zweiradfahrers führen kann. Der Sensor muss seine Funktion zumindest so lange ausüben, bis eine Sicherheitseinrichtung die Folgen des Aufpralls mildern kann. Der Sensor selbst darf dabei weder Schaden erleiden noch selbst übermäßigen Zug- und Druckspannungen, die zu einer Deformation des Sensors selbst führen, ausgesetzt werden.

Somit muss sichergestellt werden, dass der Sensor so in das energieabsorbierende Außenverkleidungsteil oder den Crashabsorber eingebaut wird, dass er die Deformationen unbehindert von Scher-, Druck- oder Zugkräften ausführt, die zu einer Veränderung der sensitiven Bereiche des Sensors oder gar zu einer Zerstörung des Sensors führen.

Zur Lösung des Problems der unbehinderten Übertragung von Deformationen wird ein Sensor oder ein Sensorband verwendet. Dieser Sensor oder das Sensorband wird in ein deformierbares Teil der Frontseite des Fahrzeugs, beispielsweise in den Schaumstoff, der sich zwischen der Stoßfängeraußenhaut und dem Stoßfängerquerträger befindet, integriert. Beim Aufprall eines Gegenstandes auf den Stoßfänger wird die Stoßfängeraußenhaut zusammen mit dem Sensor oder dem Sensorband und dem Schaumstoff lokal gestaucht oder gedehnt. Entsprechend der Form des Aufprallgegenstandes wird ein Stauchungsmuster (Negativform) und ein Dehnungsmuster am Stoßfänger erzeugt. Damit dieses Stauchungsmuster und Dehnungsmuster erzeugt werden kann, ist der Sensor oder das Sensorband schwimmend in dem Schaumstoff gelagert. Durch die schwimmende Lagerung des Sensorbandes im Schaumstoff ist das Sensorband in der Lage, sich der Kontur des Aufprallgegenstandes anzupassen. Auf dem Sensorband können die Sensoren als Sensorpaare angeordnet sein, um einen Vergleich der Messwerte einzelner, parallel angeordneter Sensoren zu erhalten. Mehrere Reihen von Sensoren erlauben zusätzlich eine versetzte Anordnung der Sensoren, um den Deformationsbereich präziser abbilden zu können. Bei den Sensoren handelt es sich vorzugsweise um Sensoren, denen ein optisches Meßprinzip zugrunde liegt. Dieses Messprinzip kann unter Verwendung von Lichtwellenleitern verwirklicht werden. In einem derartigen Lichtwellenleiter wird Licht durch einen lichtdurchlässigen Kern transportiert und von einem lichtreflektierenden Mantel wieder in den Kern reflektiert. Durch den Ersatz des lichtwellenreflektierenden Materials durch ein lichtabsorbierendes Material in einem Teil des Mantels kann ein Anteil des Lichts ausgekoppelt werden. Durch die Deformation wird ein Wert für den Anteil an nicht ausgekoppeltem Licht für jeden der Sensoren ermittelt. Dieser Wert ist ein Maß für die Größe der Deformation, in diesem Fall für die Größe der Schaumstoffeindrückung. Die Schaumstoffeindrückung kann nun mittels eines Algorithmus berechnet werden, wodurch das Eindringungsprofil ermittelt wird.

Aus dem Eindringungsprofil wird der Kennwert für die Masse $m_0$ ermittelt, wobei die Berechnungsmethode in der Einleitung der Beschreibung erläutert wird.

Das Fußgängerschutzsystem ist z.B. bei einer Masse $m_0$ beziehungsweise einer effektiven Masse $m_{eff}$ zwischen ca. 5 kg und 20 kg aktivierbar während bei einer Masse $m_0$ beziehungsweise einer effektiven Masse $m_{eff}$ kleiner als ca.

5 kg und größer als 20 kg eine Aktivierung desselben Fußgängerschutzsystems verhindert wird.

Das Massenfenster ermöglicht nur dann das Aktivieren des Fußgängerschutzsystems, wenn mit großer Wahrscheinlichkeit der Aufprall eines Fußgängers vorliegt. Bei Fußgängerschutzsystemen, die eine Änderung der Position der Motorhaube umfassen, verhindert das obengenannte Kriterium die Auslösung, d.h. das Aufstellen der Motorhaube beim Aufprall auf eine Mauer oder auf einen Baum. So wird vermieden, dass die aufgestellte Motorhaube die Insassen des Fahrzeugs zusätzlich gefährdet, weil die Gefahr besteht, dass sie durch die Windschutzscheibe in den Fahrzeuginnenraum geschoben wird.

Bei einer Aufprallgeschwindigkeit zwischen z.B. 20 km/h und 60 km/h ist ein Aktivieren einer Vorrichtung für den Fußgängerschutz möglich und bei einer Aufprallgeschwindigkeit kleiner als ca. 20 km/h und größer als 60 km/h wird ein Aktivieren einer Vorrichtung für den Fußgängerschutz verhindert, wodurch eine zusätzliche Gefährdung der Insassen des Fahrzeugs vermieden werden soll.

Die Erfindung ist in besonders vorteilhafter Weise dadurch weitergebildet, dass Sensoren mit mehreren sensitiven Bereichen vorgesehen sind, die sich an verschiedenen Orten des Fahrzeugs befinden. Durch die Maßnahme, dass ein Sensor mehrere sensitive Bereiche aufweist, kann die Anzahl der erforderlichen Sensoren erheblich verringert werden. Dabei nimmt man bewusst in Kauf, dass Information bezüglich des Ortes des Aufpralls zumindest teilweise verloren geht. Dies ist vor dem Hintergrund verständlich, dass in den meisten Systemen ohnehin nur eine einzige Maßnahme zur Verfügung steht, um den Aufprall zu dämpfen, sei es durch einen Airbag oder durch das Anheben der Motorhaube im hinteren Bereich. Auch wenn die Information bezüglich des Ortes des Aufpralls verloren geht, so bleibt doch als wesentliche Information diejenige über die Charakteristik des Aufpralls erhalten. So kann beispielsweise der Aufprall eines Fußgängers von einem Aufprall bei einem Parkiermanöver unterschieden werden, weil die Charakteristik des Aufpralls auf ein feststehendes, nicht deformierbares Objekt sich von der Charakteristik des Aufpralls auf ein bewegliches, begrenzt deformierbares Objekt unterscheidet, welches somit in seinen Abmessungen als Fußgänger oder Zweiradfahrer erkannt wird.

Das erfindungsgemäße Fußgängerschutzsystem ist in besonders vorteilhafter Weise dadurch weitergebildet, dass die Sensoren beziehungsweise die sensitiven Bereiche der Sensoren entlang eines Stoßfängers des Fahrzeugs angeordnet sind und dass die Sensoren übereinander angeordnet sind. Auf diese Weise wird der Forderung Rechnung getragen, dass der Aufprall des Fußgängers möglichst frühzeitig erfasst wird. Bei der Verwendung von Kontaktsensoren erfolgt die Anordnung von Sensoren möglichst weit vorne am Fahrzeug. Ein einzelner Sensor kann sich so beispielsweise über die gesamte Länge des Stoßfängers oder Frontspoilers oder anderer Außenverkleidung im Frontbereich des Fahrzeugs erstrecken, wobei eine Vielzahl sensitiver Bereiche entlang der Länge des Sensors zur Erfassung der Charakteristik des Aufpralls vorgesehen sind.

Es kann nützlich sein, dass die einem Sensor zugehörigen sensitiven Bereiche in regelmäßigen Abständen entlang beispielsweise eines Stoßfängers des Fahrzeugs angeordnet sind. Auf diese Weise kann ein Sensor den gesamten Bereich, über den er sich erstreckt, mit gleichmäßiger Charakteristik abdecken.

Die vorgeschlagene Lösung nutzt die Deformationseigenschaften des Schaums oder energieabsorbierenden Teils aus, um mit diesem definierten Deformationsverhalten genaue Rückschlüsse auf die Ursache der Deformationen zu liefern, die als Folge von Aufprallereignissen auf die Frontseite des Fahrzeugs, das heißt insbesondere auf die einem Stossfänger oder Frontspoiler zugeordnete Außenverkleidung einwirken, indem der Deformationssensor die gemessenen Deformationswerte an eine Zentraleinheit überträgt. In der Zentraleinheit sind die für den Aufprall mit Fußgängern oder Zweiradfahrern charakteristischen Deformationsabläufe gespeichert. Derartige Deformationsabläufe stammen aus den Versuchsreihen und Simulationen, welche zum Fußgängerschutz und zum Schutz von Zweiradfahrern durchgeführt werden. Ein Vergleich mit den gespeicherten Werten liefert Informationen, ob es sich um einen Aufprall handelt, an welchem ein Fußgänger beteiligt ist. Zudem wird die zeitliche Veränderung der Deformationsmuster ermittelt, das heißt, der Sensor liefert in definierten Zeitperioden Aussagen über den Verlauf der Deformationsmuster. Aus dem zeitlichen Ablauf lassen sich Massenbereich und Deformationsgeschwindigkeit ermitteln. Diese Entscheidungskriterien führen zur Auslösung des Fußgängerschutzsystems, falls Massenbereich, Fahrzeuggeschwindigkeit (unabhängig ermittelt) und Deformationsmusterverlauf mit den für einen Fußgängeraufprall charakteristischen Vergleichswerten übereinstimmen.

Um die Messungen mit Hilfe einer Vielzahl von Sensoren oder eines Sensorbandes durchzuführen, enthält der Frontbereich des Fahrzeugs mindestens ein energieabsorbierendes Teil, welches eine Sensoranordnung enthält, welche die Deformationen des energieabsorbierenden Teils aufnimmt, die während eines Aufpralls des Fahrzeugs auf ein Objekt entstehen. Die Sensoranordnung ist in das energieabsorbierende Teil integriert und führt die Verformungen des energieabsorbierenden Teils mit aus, ohne jedoch selbst den auftretenden

Belastungen ausgesetzt zu sein.

Um die Messungen mit Hilfe einer Vielzahl von Sensoren oder eines Sensorbandes durchzuführen, enthält der Frontbereich des Fahrzeugs mindestens ein energieabsorbierendes Teil, welches eine Sensoranordnung enthält, welche die Deformationen des energieabsorbierenden Teils aufnimmt, die während eines Aufpralls des Fahrzeugs auf ein Objekt entstehen. Die Sensoranordnung ist in das energieabsorbierende Teil integriert und führt die Verformungen des energieabsorbierenden Teils mit aus.

Die Sensorsnordung ist in einer vorteilhaften Ausführungsform in eine Nut des energieabsorbierenden Teils eingeklebt. Die Nut enthält eine Klebeschicht. Die Klebeschicht überträgt die Deformationen aus einem Aufprall auf den Sensor oder die Sensoren. Die Klebeschicht nimmt Scherkräfte bis zu einem Schwellenwert auf und bildet bei Scherkräften über einem Schwellenwert eine Sollbruchstelle aus. Der Sensor wird durch das Versagen der Klebeschicht vom energieabsorbierenden Teil entkoppelt. Die Sensoranordnung ist mit dem energieabsorbierenden Teil über eine Steckverbindung verbunden. Die Steckverbindung ist als Teil der Sensoranordnung oder des energieabsorbierenden Teils ausgebildet.

Der Sensor weist nichtsensierende Bereiche auf. Die nichtsensierenden Bereiche können Langlöcher enthalten.

Die Sensoranordnung kann auch in einer Tülle angebracht werden. Die Tülle ist ein einem Ausführungsbeispiel in das energieabsorbierende Teil eingeschäumt. Das Material der Tülle kann im wesentlichen dem Material des energieabsorbierenden Teils entsprechen. Die Tülle wird auf das energieabsorbierende Teil geklebt und kann mit dem energieabsorbierenden Teil durch eine Steckverbindung verbunden sein, welcher als Teil der Sensoranordnung oder als Teil des energieabsorbierenden Teils ausgebildet sein kann. Der Sensor ist in der Tülle beweglich gelagert, damit er selbst keinen Druck- Zugspannungen ausgesetzt wird, die zur Beschädigung des Sensors führen können.

Fig. 1 zeigt eine perspektivische Darstellung eines Vorderteils eines Fahrzeugs mit einem energieabsorbierenden Teil nach einem ersten Ausführungsbeispiel.

Fig. 2 zeigt einen Schnitt durch ein energieabsorbierendes Teil nach einem zweiten Ausführungsbeispiel

Fig. 3 zeigt eine Ansicht eines energieabsorbierenden Teils nach dem in Fig. 2 dargestellten Ausführungsbeispiel

Fig. 4 zeigt einen Schnitt durch einen Frontbereich eines Fahrzeugs nach einem dritten Ausführungsbeispiel

Fig. 5a zeigt die Wirkungsweise der Sensoren nach einem ersten Ausführungsbeispiel

Fig. 5b zeigt die Wirkungsweise der Sensoren nach einem ersten Ausführungsbeispiel

Fig. 6a zeigt eine erste mögliche Anordnung von Sensoren auf einem Sensorband

Fig. 6b zeigt eine zweite mögliche Anordnung von Sensoren auf einem Sensorband

Fig. 6c zeigt eine dritte mögliche Anordnung von Sensoren auf einem Sensorband

Fig. 7 zeigt den Aufbau eines Sensors und die Signalverarbeitung

Fig. 8 zeigt eine Ansicht auf das vordere Ende eines Kraftfahrzeugs

Fig. 9a zeigt einen Schnitt durch ein erstes Ausführungsbeispiel der Befestigung des Sensors oder Sensorbandes

Fig. 9b zeigt einen Schnitt durch ein zweites Ausführungsbeispiel der Befestigung des Sensors oder Sensorbandes

Fig. 9c zeigt einen Schnitt durch ein drittes Ausführungsbeispiel der Befestigung des Sensors oder Sensorbandes

Fig. 9d zeigt einen Schnitt durch ein viertes Ausführungsbeispiel der Befestigung des Sensors oder Sensorbandes

Fig. 9e zeigt einen Schnitt durch ein fünftes Ausführungsbeispiel der Befestigung des Sensors oder Sensorbandes

Fig. 10 zeigt eine Darstellung der gemessenen Deformationswerte eines Beispiels für einen Pfahlaufprall

Fig. 11 zeigt eine Darstellung der gemessenen Deformationswerte eines Beispiels für einen Beinaufprall (sog. Lower leg - Aufprallsituation)

Fig. 12 zeigt eine Darstellung der gemessenen Deformationswerte für einen Rechteckaufprall.

Fig. 13 ist die Bestimmung der Intrusion nach einer ersten Versuchsanordnung

Fig. 14 ist die Bestimmung der Intrusion nach einer zweiten Versuchsanordnung

Fig. 15 ist die Bestimmung der Intrusion nach einer dritten Versuchsanordnung

Fig. 16 ist die Bestimmung der Intrusion nach einer vierten Versuchsanordnung

Fig. 17 ist die Bestimmung der Intrusion nach einer fünften Versuchsanordnung

Fig. 18 ist die Bestimmung der Intrusion nach einer sechsten Versuchsanordnung

Fig. 19 ist die Bestimmung der Intrusion nach einer siebenten Versuchsanordnung

Fig. 20 ist die Bestimmung der Intrusion nach einer achten Versuchsanordnung

Fig. 21 ist die Bestimmung der Intrusion nach einer neunten Versuchsanordnung

Fig. 22 ist die Bestimmung der Intrusion nach einer zehnten Versuchsanordnung

Fig. 23 ist die Bestimmung der Intrusion nach einer elften Versuchsanordnung

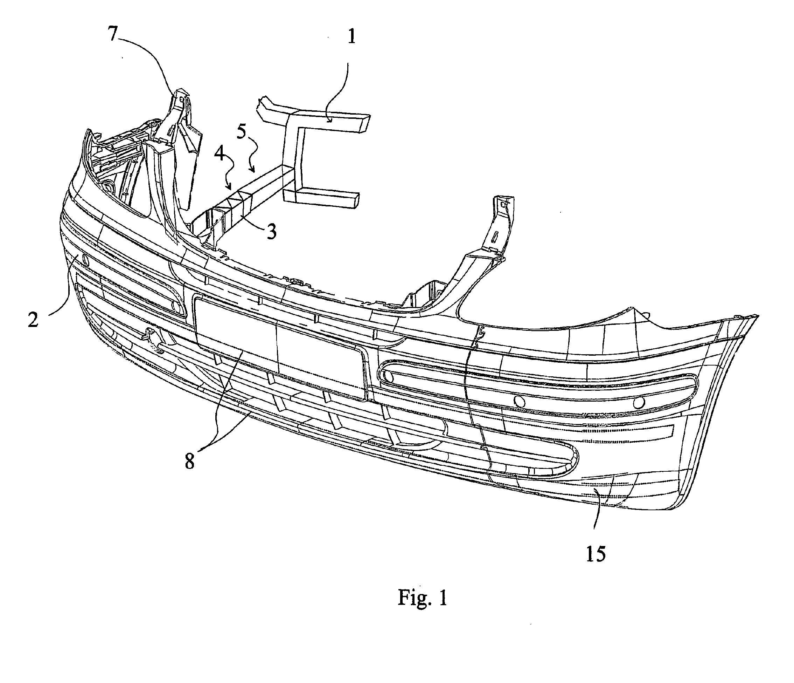

Fig. 1 zeigt eine perspektivische Darstellung eines Vorderteils eines Fahrzeugs mit einem energieabsorbierenden Teil nach einem ersten Ausführungsbeispiel. In diesem Fall ist das energieabsorbierende Teil 3 in ein Verbindungselement 4 zwischen der tragenden Struktur 1 und dem Stossfänger 2 integriert. Das energieabsorbierende Teil 3 ist nach dieser Ausführungsform als eine faltbare fachwerkartige Struktur ausgebildet. Das energieabsorbierende Teil 3 kann somit einen Teil der tragenden Funktion für den Stossfänger und die in diesem vorgesehenen Einbauten, wie Kühlergrill, Scheinwerfer und dergleichen übernehmen.

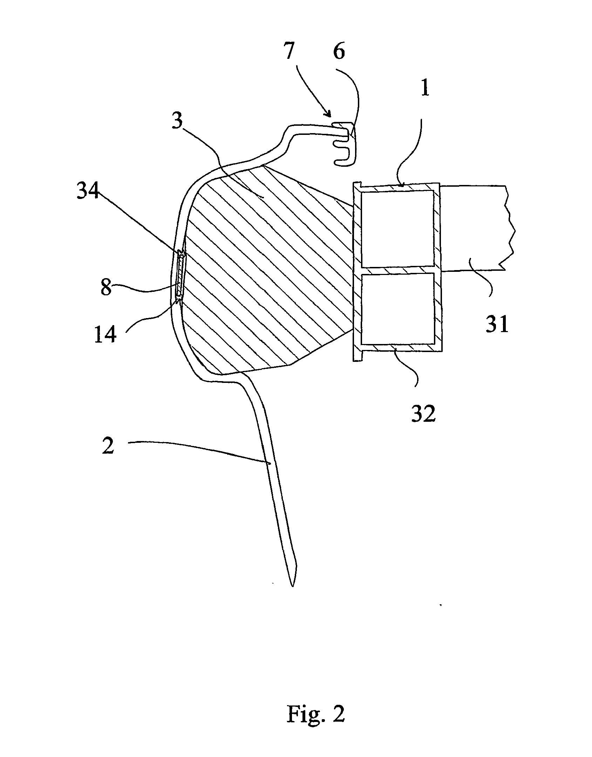

Fig. 2 zeigt einen Schnitt durch ein energieabsorbierendes Teil 3 nach einem zweiten Ausführungsbeispiel. Das energieabsorbierende Teil 3 ist zwischen Stossfänger 2 und tragender Struktur 1 angebracht. Das energieabsorbierende Teil 3 umfasst ein Schaummaterial, welches in den Stossfänger eingepaßt wird.

Das energieabsorbierende Teil erstreckt sich über die gesamte Fahrzeugbreite, wenn als tragende Struktur 1 ein Querträger 32 vorgesehen ist. An den Querträger 32 kann ein Längsträger 31 anschließen, der aber nicht vollständig dargestellt ist. Dem energieabsorbierenden Teil 3 selbst kommt keine tragende Funktion zu.

In diesem Fall ist eine in Fig. 2 dargestellte Aufhängung 7 des Stossfängers vorzusehen, welche ein Aufnahmeelement 6 umfasst. Der Stossfänger umhüllt zwar das energieabsorbierende Teil, muss aber keine Einheit mit dem energieabsorbierenden Teil ausbilden. Ein Sensor oder Sensorband 8 ist in eine Nut 34 eingelegt. Diese Nut kann sich im wesentlichen über die gesamte Fahrzeugbreite erstrecken. Die Befestigung des Sensors oder Sensorbandes 8 in der Nut erfolgt durch Verkleben, Verschäumen oder durch eine Steckverbindung oder eine Klemmverbindung. In Fig. 2 sind je ein Klemmelement 51 an den Enden des Sensors oder Sensorbandes 8 vorgesehen. Sowohl zwischen Außenverkleidung, also dem Stossfänger 2, als auch zwischen energieabsorbierenden Teil 3 und Sensor verbleibt ein Zwischenraum, sodass sich das Sensorband unbehindert von Druckkräften verformen kann.

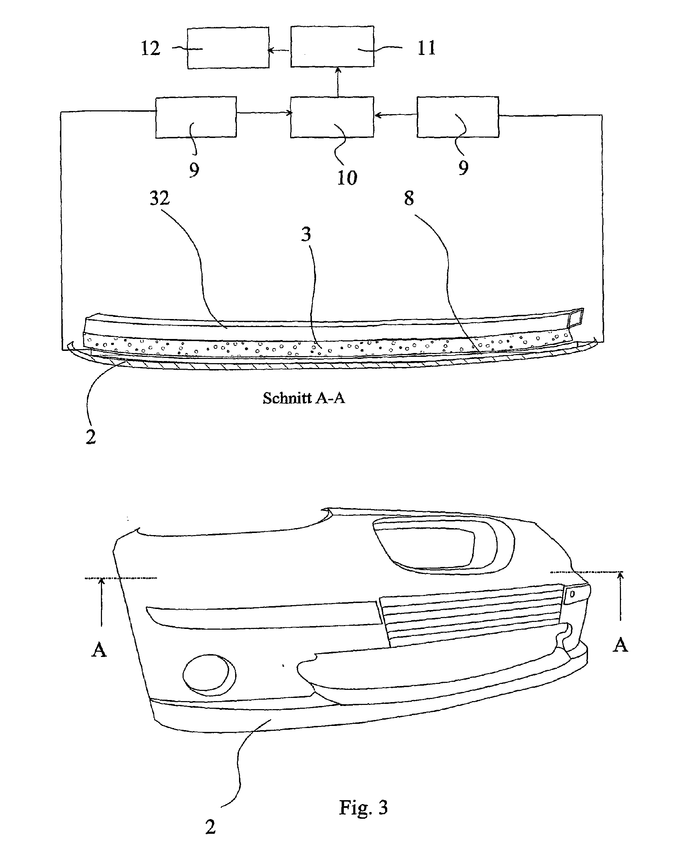

Fig. 3 zeigt eine Ansicht eines energieabsorbierenden Teils 3 nach einem weiteren Ausführungsbeispiel. Gezeigt ist eine Explosionsdarstellung eines Stossfängers 2, einer tragenden Struktur 1 und eines energieabsorbierenden Teils 3. Das energieabsorbierende Teil 3 befindet sich ebenfalls im oberen Bereich des Stossfängers 2. Die tragende Struktur 1 ist im Spoilerbereich des Stossfängers 2 angebracht. Das energieabsorbierende Teil 3 erstreckt sich über die gesamte Fahrzeugbreite. In diesem Fall werden Verformungen über der gesamten Fahrzeugbreite über ein Sensorband 8 aufgenommen. Das Sensorband 8 liegt in einer Nut 34 des energieabsorbierenden Teils. Das Sensorband enthält eine Anzahl Sensoren, welche Messsignale über die Deformation des Stossfängers 2 und die von einem Aufprallobjekt über den Stossfänger 2 auf das energieabsorbierende Teil 3 eingeleitete Deformation liefern. Die Messungen der Deformation nehmen nur einen Bruchteil einer Millisekunde in Anspruch, sodass eine Vielzahl von Messungen pro Millisekunde vorgenommen werden kann. Dadurch ist es möglich, den zeitlichen Ablauf der Deformation zu ermitteln und dem das Sensorband, eine die Sensorsignale aufnehmende und in eine elektrische Größe umwandelnde Umwandlungseinheit 9, eine die elektrischen Größen verarbeitende Zentraleinheit 10 zugeordnet ist, in welcher ein Algorithmus abläuft, welcher die Deformationsarbeit und Kennwerte für die Masse ermittelt und elektrische Ausgangssignale an eine Regeleinheit 11 für einen oder mehrere Aktuatoren 12 sendet, die im Fall eines Fußgängeraufpralls eine nicht dargestellte Sicherheitseinrichtung auslösen.

Die Signalkette der in Fig. 1 und Fig. 2 beschriebenen Ausführungsbeispiele entspricht der Signalkette, wie sie vom Sensorband in Fig. 3 ausgehend, abläuft, wenn ein Aufprall detektiert wird. Allerdings kommt in Fig. 1 oder 2 kein Sensorband 8 zum Einsatz, sondern es werden die Signale einzelner miteinander nicht notwendigerweise gekoppelter Sensoren ausgewertet. Wenn der Stossfänger verformt wird, wird jeder einzelne Winkel für die Deformation des betroffenen Sensors ermittelt. Mit Hilfe dieser Winkel kann bei bekannter Sensorlänge der Wert für den Anteil an der Deformation ermittelt werden, welche von dem betroffenen Sensor gemessen wurde. Unter der Annahme, dass die Deformation zu Deformationsbeginn annähernd symmetrisch verläuft, kann anhand der Anzahl der aktiven Sensoren ein Halbprofil der Deformation ermittelt werden.

Mit diesen Deformationshalbprofilen kann die Form des Objekts und seine Größe annähernd bestimmt werden.

Durch die Messung des zeitlichen Ablaufs der Deformationen kann wiederum ermittelt werden, ob das die Deformation erzeugende Objekt selbst deformiert wird. Bei einem deformierbaren Objekt wird der Beginn der Deformation verzögert sein, weil zuerst das Objekt, also beispielsweise das Bein des Fußgängers, einer Deformation unterworfen wird, bevor die Deformation des Stossfängers eingeleitet wird.

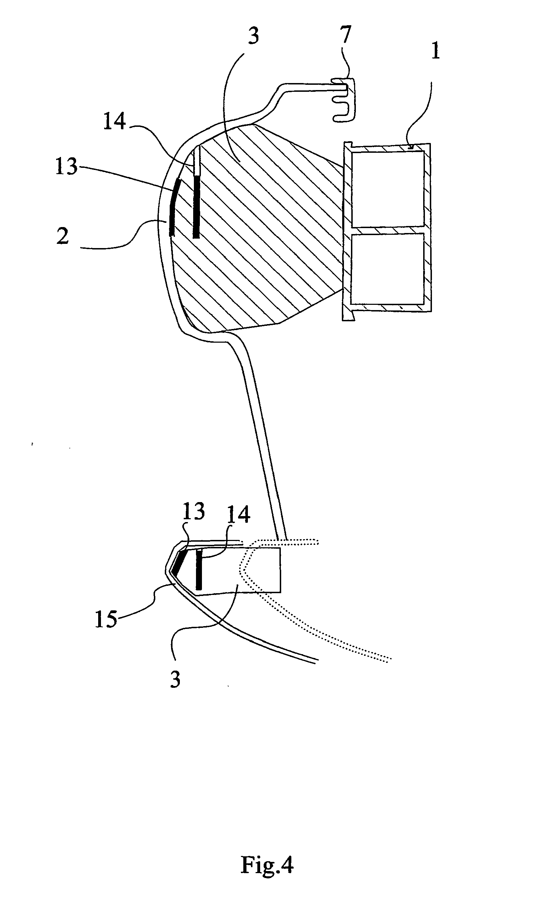

Fig. 4 zeigt einen Schnitt durch einen Frontbereich eines Fahrzeugs nach einem dritten Ausführungsbeispiel. In dieser Abbildung werden mögliche Sensoranordnungen im Schnitt dargestellt. Die Sensoren befinden sich zwischen Stossfänger 2 und energieabsorbierendem Teil 3 in einer in dem energieabsorbierenden Teil 3 vorhandenen Ausnehmung 13. Diese Anordnung eröffnet die Möglichkeit, den Sensor oder das Sensorband zu einem beliebigen Zeitpunkt einzubauen. Außerdem ist der Sensor oder das Sensorband jederzeit einer Inspektion oder Wartung zugänglich, da es nach der Demontage des Stossfängers frei liegt.

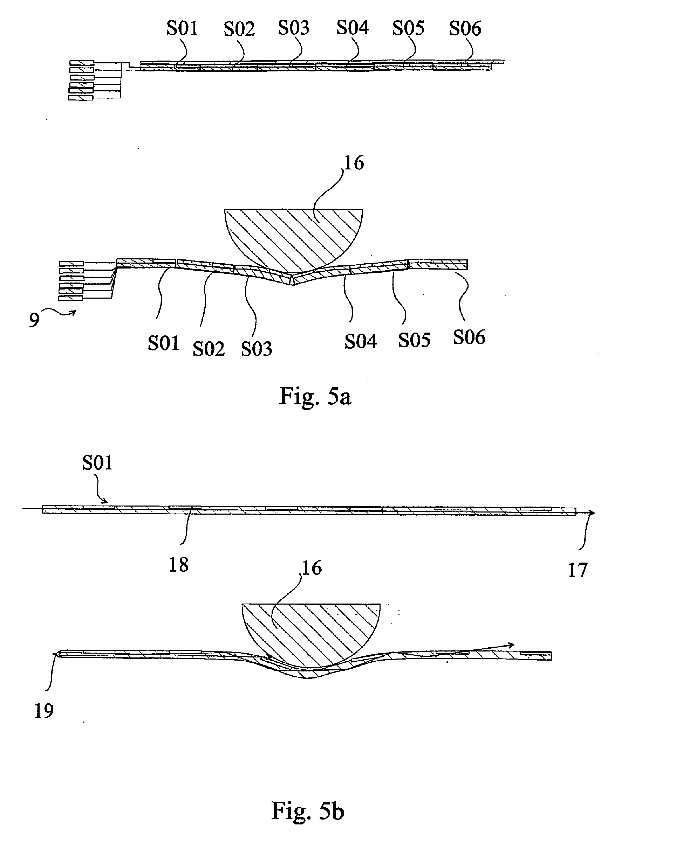

Alternativ dazu können Sensoren in Hohlräume 14 des energieabsorbierenden Teils eingelegt werden. Beispiele dafür sind die Hohlräume 14 in einem dem Stossfänger 2 zugehörigen energieabsorbierenden Teil 3 oder die einem Frontspoiler 15 zugehörigen energieabsorbierenden Teile 3. Wenn der Sensor im Spoilerbereich des Frontspoilers 15 eingebaut wird, erfolgt der Einbau analog zu den vorher angeführten Ausführungsbeispielen. Für die Gewährleistung der notwendigen Präzision der Messung ist es vorteilhaft, dass im Spoilerbereich des Frontspoilers 15 eine homogene Steifigkeitsverteilung über die Fahrzeugbreite vorliegt. Fig. 5a zeigt die Wirkungsweise der Sensoren nach einem ersten Ausführungsbeispiel.

Das oben beschriebene Sensorband wird in ein energieabsorbierendes Teil 3, welches sich unter der Einwirkung eines Stoßes deformieren kann, wie beispielsweise in den Schaumstoff, der sich zwischen dem Stoßfänger und einer tragenden Struktur 1, wie einem Stoßfängerquerträger befindet, integriert, wie in Fig. 2 bis Fig. 4 dargestellt wurde. Figur 5a zeigt eine schematische Darstellung eines Objekts 16 vor dem Aufprall auf ein Fahrzeug. Da sich das Objekt 16 vor dem Aufprall auf das Fahrzeug befindet, liegt eine Relativgeschwindigkeit $v_0 \sim 0$ vor, die im Moment des Aufpralls die

Intrusionsgeschwindigkeit des Objekts 16 in das Fahrzeug sein wird. Bei einem Objekt mit der Masse $m_0$ liegt somit eine kinetische Energie $E_{kin}$ vor.

$$E_{kin} = 0{,}5 \cdot m_0 \cdot v_0^2$$

Die schematische Darstellung eines Objekts 16 nach dem Aufprall auf ein Fahrzeug zeigt die Deformation der in die Frontseite des Fahrzeugs integrierten Anordnung von Sensoren oder dem Sensorband. Nach dem Aufprall des Objekts 16 auf das Fahrzeug kann in guter Näherung davon ausgegangen werden, dass die gesamte kinetische Energie in Deformationsarbeit $W_{def}$ umgesetzt wird.

Aus der Energiebilanz ergibt sich somit

$$m_0 = 2 \cdot \frac{W_{def}}{v_0^2}$$

Wenn das Objekt 16 selbst deformierbar ist, so setzt sich die Deformationsarbeit aus der im Fahrzeug deponierten Deformationsarbeit und der im Objekt 16 deponierten Deformationsarbeit zusammen, das heißt:

$$W_{def} = W_{def/Fahrzeug} + W_{def/Objekt}$$

In guter Näherung kann auf der Grundlage diese Beziehung eine effektive Masse $m_{eff}$ über einen Dynamikfaktor definiert werden, so dass

$$m_{eff} = f_{dyn} \times m_0 \quad \text{gilt.}$$

Beim Aufprall eines Gegenstandes auf den Stoßfänger 2 wird dieser zusammen mit den Sensoren (S01, S02, S03, S04, S05, S06) oder dem Sensorband und dem Schaumstoff lokal deformiert. Entsprechend der Form des Aufprallgegenstandes wird ein Deformationsmuster am Stoßfänger erzeugt, welches von den Sensoren nach dem nachfolgenden Prinzip aufgenommen werden kann und einen Messwert pro Sensor und pro Zeiteinheit liefert. Durch die schwimmende Lagerung des Sensors oder Sensorbandes im Schaumstoff, ist das Band mit den Sensorpaaren in der Lage, sich der Kontur des Aufprallgegenstandes anzupassen.

Bei den Sensoren handelt es sich in einer vorteilhaften Ausgestaltung um faseroptische Sensoren.

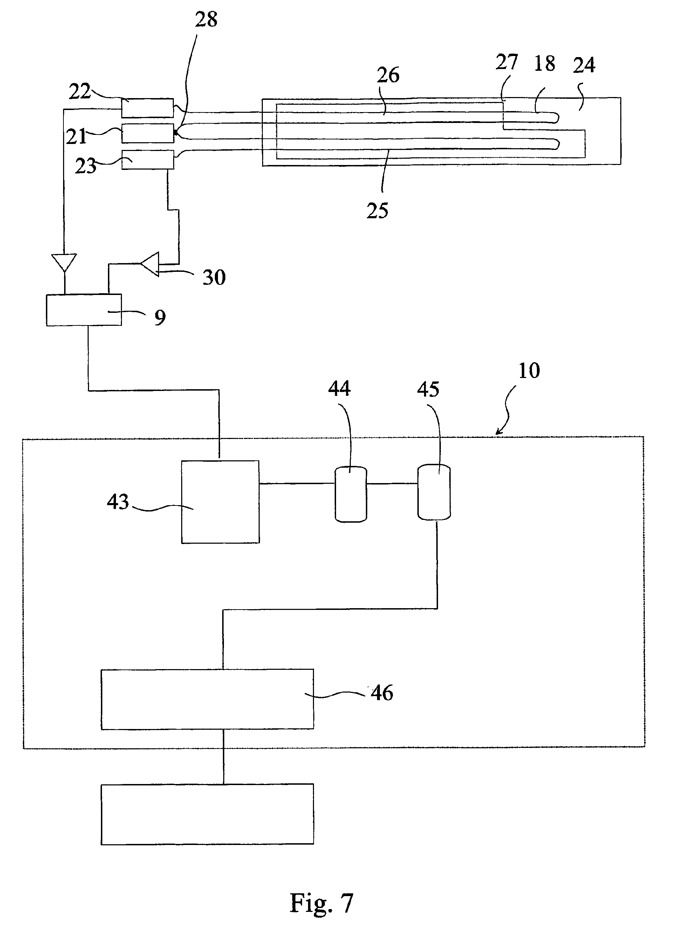

Jeder Sensor hat dabei einen in Fig. 7 genauer dargestellten Aufbau. Ein faseroptischer Sensor enthält optische Fasern, die Grundlage der Messung sind.

Eine optische Faser besteht aus einem lichtführenden Kern, dem Lichtwellenleiter und einer Ummantelung, deren Brechungsindex kleiner als der des Kerns ist, damit kein Licht nach außen austreten kann. Im Kern kann sich das Licht durch die Totalreflexion an der Grenze Kern-Mantel ausbreiten. Bei der Wahl der Werkstoffe gibt es unterschiedliche Kombinationen für Mantel und Kern, die beide aus Quarzglas, aus normalem Glas oder aus Kunststoff bestehen können oder eine Materialkombination, beispielsweise einen Mantel aus Kunststoff und Kern aus Quarzglas enthalten können. Ein faseroptischer Sensor misst Veränderungen in der Übertragung des Lichts, die durch mechanische Einwirkungen auf den Mantel des Lichtwellenleiters entstehen. Grundlegend lässt sich die Wirkungsweise eines faseroptischen Sensors aber auf wenige Prinzipien reduzieren. Es wird dabei zwischen extrinsic (externen) und intrinsic (internen) Sensoren unterschieden.

Bei den externen Sensoren übernimmt der Lichtwellenleiter ausschließlich den Licht- bzw. Datentransport hin zur Messstelle und zurück zum Empfänger. An der Messstelle selbst wird die Messung von einem Sensor übernommen, welcher nicht zum Typ der faseroptischen Sensoren gehört, welcher dann das ankommende Licht in Abhängigkeit vom Messeffekt moduliert.

Bei den internen faseroptischen Sensoren wirkt die Messgröße unmittelbar auf die Übertragungseigenschaften des Lichtwellenleiters. Hierbei kommt es aufgrund äußerer Einflüsse zu einer Änderung der Eigenschaften des Lichtwellenleiters wie z.B. Geometriedeformationen oder Brechzahländerungen, d.h. das interne Gefüge des Lichtwellenleiters wird verändert. Bei den internen faseroptischen Sensoren wird wiederum zwischen zwei Arten von Fasern, den Monomode- und Multimodefasern unterschieden. Bei den Multimode-Sensoren werden die Transmissionseigenschaften des Lichtwellenleiters durch die zu messenden Größe beeinflusst, d.h. die Intensität des Lichtes ändert sich durch die von außen wirkenden Größen. Beim Multimode-Sensor ändert sich die Phase der geführten Lichtwellen mit den äußeren Einwirkungen, wobei zwischen Intensitäts-, Phasen-, Frequenz- und Polarisationsmodulation unterschieden wird.

Mit dem Fortschritt in der Optoelektronik haben faseroptische Sensoren immer mehr an Bedeutung gewonnen. Die gemessene Größe, das Licht, ist nicht besonders anfällig gegenüber den meisten äußeren Einflüssen. Besonders hervorzuheben ist hierbei die sehr hohe Unempfindlichkeit gegenüber elektromagnetischen Wellen und

Magnetfeldern. Eine Temperaturkompensation ist dabei sehr gut zu realisieren. Zudem ermöglicht das System eine nahezu verlustfreie Übertragung der Daten über eine große Entfernung. In der Luftfahrt und Raumfahrt zeigen die Sensoren ihr hohes Anwendungspotential beim Erstellen von Lastprofilen der Tragwerke und bei der Messung der Temperaturverteilung in der Fluggastkabine. Aber auch in anderen Bereichen, wie in der Wehrtechnik, Schifffahrt, Ölförderung haben faseroptische Sensoren ihren Einzug gefunden.

Grundsätzlich gibt es unterschiedliche physikalische Phänomene, mit Hilfe derer ein faseroptischer Sensor seine Umwelt sensieren kann. Die Mikrobiegung und Faser-Bragg-Gitter sind zwei für den Fußgängerschutz relevante Effekte und werden nachfolgend erläutert.

Wird bei einem faseroptischen Sensor basierend auf der Mikrobiegung nach Fig. 7 eine Faser gebogen, so wird ein Teil des Lichts in den Mantel ausgekoppelt. Um diese Verlustrate zu minimieren, wird der Mantel einer Faser normalerweise mit einer reflektierenden Schicht versehen. Dieser Effekt kann aber auch zur Bestimmung der Biegung der Faser in einem bestimmten Bereich benutzt werden. Hierzu wird im sensitiven Bereich der Faser die reflektierende Schicht der Ummantelung entfernt und die Faser in einem lichtabsorbierenden Material eingebettet, damit es zu keiner Rückstreuung kommt.

Die Verlustrate hängt dabei direkt von der Richtung der Biegung der Faser ab und die Höhe der Verlustrate ist linear proportional zu der Stärke der Biegung. Diese Verlustrate wird in einer Opto-Elektronik in ein Spannungssignal umgewandelt, welches direkt proportional zu der Biegung des sensitiven Bereichs der Faser ist.

In der in Fig. 5a dargestellten Anordnung ist jeder Sensor an eine eigene Umwandlungseinheit 9, die eine Lichtquelle und an einen eigenen opto-elektronischen Wandler enthält, angeschlossen.

Ein Objekt 16 kann beim Aufprall auf die Sensoren S01 bis S06 eine bestimmte Deformation der Sensoren bewirken, die in charakteristischer Weise von der Form des Objektes 16 abhängt. Die Sensoren S01 bis S06 werden in unterschiedlicher Weise durch den Aufprall des Objekts 16 deformiert, so dass diese auch unterschiedliche Signalintensitäten liefern. Legt man die Sensoren S01 bis S06 so aus, dass sie bei größerer Verformung eine größere Signalintensität liefern, so kann im vorliegenden graphisch dargestellten Beispiel gelten, dass die Signalintensität des Sensors S03 n-mal so groß ist wie die Signalintensität des Sensors S02. Zusätzlich gilt, dass die Signalintensität des Sensors S02 in etwa n-mal so groß ist wie die Signalintensität des Sensors S01. Gleiches gilt für die Beziehung der Signalintensitäten der Sensoren S04, S05, S06. Somit liegt in diesem Ausführungsbeispiel eine charakteristische Beziehung zwischen den Signalintensitäten vor, die ebenso charakteristisch für eine bestimmte Objektart sein kann, beispielsweise das Bein eines Fußgängers.

Die Signalintensität entspricht dabei dem Anteil des Lichts, welches absorbiert wurde. Bildet man den Differenzbetrag des eingetragenen Lichts von dem Licht, welches aus der Rückleitung vom Sensor in den opto-elektrischen Wandler eingespeist wird, ergibt sich die Basisgröße für die Signalintensität. Die Basisgröße wird durch den opto-elektrischen Wandler in ein Spannungssignal umgewandelt. Je größer also die Deformation ist, desto größer ist der Differenzbetrag und desto größer ist somit der Wert des Spannungssignals.

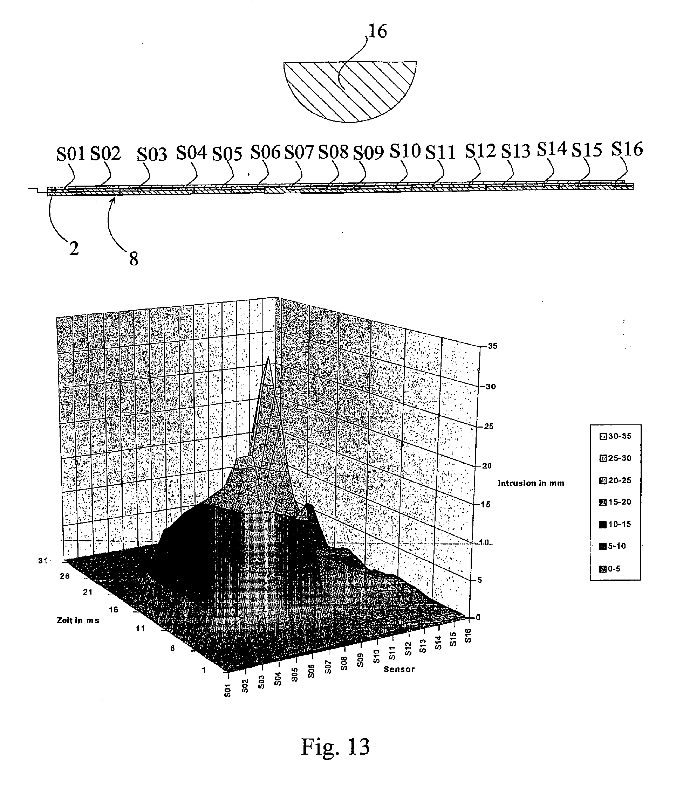

Durch die oben beschriebene Berechnung der Schaumstoffeindrückung kann nun mittels eines Algorithmus aus den Spannungssignalen das Eindringungsprofil oder Intrusionsprofil berechnet werden. Diese Berechung erfolgt in der Zentraleinheit 10. Das berechnete Eindringungsprofil wird dann mit Versuchsprofilen, die aus Versuchen mit unterschiedlichen Versuchskörpem bei genau festgelegten Versuchsbedingungen stammen, verglichen. Beispiele für derartige Versuchsprofile sind in den Fig. 13-21 offenbart. Aus diesem Vergleich wird durch die Zentraleinheit ermittelt, ob der Aufprall eine Auslösung des Fußgängerschutzsystems erfordert.

Fig. 5b zeigt eine Variante der in Fig. 5a dargestellten Sensoranordnung. Im Unterschied zu Fig. 5a sind eine ganze Reihe von lichtabsorbierenden Bereichen 18 entlang des Sensorbandes 8 angeordnet. Wenn das Sensorband verformt wird, kommt es zu einer Absorption eines Teiles der Lichtstrahlen 17. Gemessen wird der Anteil des Lichtes welches durch das Band hindurchgeleitet wird. Diese Messmethode eignet sich insbesondere für Sensoren, die in energieabsorbierenden Teilen nach Fig. 1 eingebaut sind.

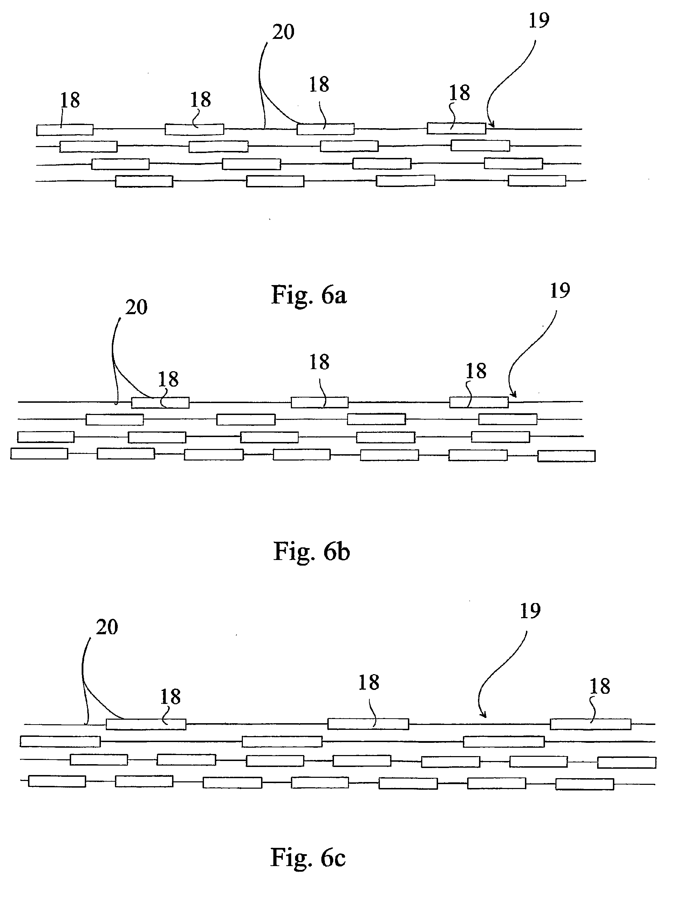

In Fig. 6a bis 6c wird dargestellt, wie mehrere Reihen solcher Sensoren kombiniert werden können. Insbesondere bei relativ geringem Platzangebot für die Sensoren durch die Ausgestaltung der energieabsorbierenden Teile können derartige Varianten zum Einsatz kommen. In Figur 6a ist eine Anordnung dargestellt, bei der sich die lichtabsorbierenden Bereiche 18 regelmäßig entlang der Sensoren 19 wiederholen. Weiterhin kann man Sensorabschnitte 20 über die verschiedenen Sensoren 19 definieren, die sich ebenfalls regelmäßig wiederholen. Bei diesem Beispiel wird ein Objekt, das in bestimmter Weise bezüglich irgendeiner der sich wiederholenden Sensorabschnitte 20 auftrifft, stets dasselbe Signalmuster erzeugen. Das Signalmuster gibt also keine Information darüber, welche der sich wiederholenden Sensorabschnitte 20 getroffen wurde. Es wird jedoch die Information über die Charakteristik des Aufpralls erfasst.

In Figur 6b sind die lichtabsorbierenden Bereiche 18 ebenfalls regelmäßig über die einzelnen Sensoren 19 verteilt. Allerdings sind die Abstände der lichtabsorbierenden Bereiche 18 auf den einzelnen Sensoren unterschiedlich. Somit würde eine solche Sensoranordnung beim Auftreffen eines Objekts andere Intensitätsmuster liefern, als beim Auftreffen des Objekts auf eine Sensoranordnung gemäß Figur 6a, wobei durch die Art der Anordnung der lichtabsorbierenden Bereiche 18 unterschiedliche Informationen über die Charakteristik des Aufpralls erhalten werden können.

Figur 6c zeigt noch eine andere Variante der Anordnung lichtabsorbierender Bereiche 18 auf den Sensoren 19, wobei in diesem Fall lichtabsorbierende Bereiche 18 mit unterschiedlichen Längsabmessungen vorgesehen sind.

Neben den in Figuren 6a bis 6c angegebenen Anordnungen von Sensoren 19 und lichtabsorbierenden Bereichen 18 der Sensoren sind zahlreiche weitere Möglichkeiten denkbar, wie beispielsweise die Verwendung von lichtabsorbierenden Bereichen unterschiedlicher Breitenabmessungen. Die Auswahl ist abhängig vom Einbauort der Sensoren.

Soll neben der Charakteristik des Aufpralls zusätzlich noch der Aufprallort festgestellt werden, können mehrere derartige Sensoranordnungen an unterschiedlichen Stellen im Fahrzeug angebracht werden. Somit kann der Ort des Aufpralls eindeutig lokalisiert werden und gleichzeitig die Aufprallursache mittels der Charakteristik ermittelt werden. Figur 7 zeigt eine Anordnung optischer Fasersensoren mit Lichtquelle 21 und Detektoren 22, 23. In einem Trägermaterial 24 sind zwei optische Fasersensoren 25, 26 angeordnet. Der optische Fasersensor 25 ist nicht mit einem lichtabsorbierenden Bereich 18 ausgestattet, während der optische Fasersensor 26 mit einem lichtabsorbierenden Bereich 18 versehen ist; dies ist durch die als unterbrochene Linie 27 dargestellte Begrenzung zum lichtabsorbierenden Bereich 18 im Trägermaterial 24 angedeutet. Koppelt man nun Licht aus einer Lichtquelle 21 an einem Ende 28 des Lichtwellenleiters des optischen Fasersensors 26 ein, so wird das Licht durch den Lichtwellenleiter des optischen Fasersensors 26 geleitet, und es gelangt schließlich mit einer verbleibenden Intensität zum anderen Ende 29 des Lichtwellenleiters des optischen Fasersensors 26. Dort kann von einem Detektor 22 die Lichtintensität gemessen werden. Wird nun der lichtabsorbierende Bereich 18 des optischen Fasersensors 26 deformiert, so hat dies einen Einfluss auf die in diesem Bereich austretende Lichtintensität und somit auch auf die von dem Detektor 22 aufgenommene Lichtintensität. Durch die Deformation des lichtabsorbierenden Bereichs 18, trifft eine größere Anzahl von Lichtstrahlen auf diesen lichtabsorbierenden Bereich. Diese Lichtstrahlen werden absorbiert und vermindern folglich die Lichtintensität. Aus der Differenz des durch die Lichtquelle 21 eingekoppelten Lichts zu der an dem Detektor 22 nachgewiesenen Intensität ergibt sich die benötigte Kenngröße für die Deformation. Um den Anteil an Verlusten, die durch den Lichtwellenleiter selbst bedingt sind, zu ermitteln, ist es möglich, parallel zu dem optischen Fasersensor 26 einen weiteren optischen Fasersensor 25 anzuordnen, wobei dieser jedoch keinen lichtabsorbierenden Bereich aufweist. Koppelt man in diesen Lichtwellenleiter Licht aus derselben Lichtquelle 21 ein, die auch für den optischen Fasersensor 26 verwendet wird, so kann das von dem Detektor 23 ausgegebene Intensitätssignal mit dem von Detektor 11 ausgegebenen Intensitätssignal verglichen werden. Über eine entsprechende elektronische Schaltung, die in diesem Ausführungsbeispiel durch einen Verstärker 30 symbolisiert ist, kann das Intensitätssignal von Detektor 23 als Eingangssignal für die Lichtquelle 21 und somit zur Darstellung einer Bezugsschaltung verwendet werden. Somit können Schwankungen der von der Lichtquelle 21 abgegebenen Intensität und Verluste der Lichtwellenleiter kompensiert werden. Das Intensitätssignal von Detektor 22, welcher allgemein als Umwandlungseinheit 9 bezeichnet wird, wird dazu verwendet, ein Spannungssignal zu erzeugen, und zwar vorzugsweise mittels eines an den Detektor 22 angeschlossenen opto-elektrischen Wandlers.

Von der Umwandlungseinheit 9 gelangen die Spannungssignale in eine Zentraleinheit 10. Die Zentraleinheit 10 enthält eine Hochpass-Filtereinheit 43, eine Subsampling-Einheit 44 und eine Kalibrierungseinheit 45. In der Subsampling-Einheit werden die Signale, die z.B. mit einer Abtastrate von 10 Signalen / Millisekunde von der Hochpass-Filtereinheit 43 eintreffen, auf eine Anzahl verringert, die dann in der Prozessoreinheit 46 weiter verarbeitet werden kann. Da die Verarbeitungsdauer der Signale im Rahmen des Algorithmus größer als die Abtastrate ist, werden nur Signale aus bestimmten Zeitabständen oder Mittelwerte der eintreffenden Signale an die Prozessoreinheit 46 weitergeleitet. Damit das aus der Subsampling-Einheit eintreffende Signal als Eingangssignal für den in der Prozessoreinheit 46 ablaufenden Algorithmus verwendet werden kann, ist eine Kalibrierung des Signals erforderlich. Anschließend erfolgt die Auswertung der Signale in der Prozessoreinheit 46. Dort läuft der Algorithmus ab, welcher die in Fig. 13 bis 23 dargestellten Informationen über den Aufprallort auswertet und einer Aufprallsituation zuordnet. Wenn die Aufprallsituation als Fußgängeraufprall identifiziert wurde, wird das Fußgängersicherheitssystem über einen oder mehrere Aktuatoren aktiviert.

Der Ablauf des Algorithmus wird nachfolgend im Detail geschildert.

Nach einem Triggersignal, das aufgrund eines Aufpralls eines Objekts erzeugt wird, werden schrittweise unterschiedliche Messwerte erfasst. Zuerst wird die Anzahl der ansprechenden Sensoren erfasst. Dann wird die Intrusionslänge auf der Grundlage einer Summation von drei Signalmaxima bestimmt. In nächsten Schritt wird auf der Grundlage einer Zeitinformation die Intrusionsgeschwindigkeit ermittelt. Dynamische Besonderheiten des Aufpralls werden erfasst, insbesondere das

Deformationsverhalten des aufprallenden Objekts. Sodann wird die Anzahl der Hauptmaxima der von den Sensoren erfassten Signale bestimmt.

Ausgehend von den bestimmten Parametern wird die Masse $m_0$ gemäß der Beziehung

$$m_0 = k \cdot \frac{W_{def}}{v_0^2},$$

ermittelt.

Ausgehend von diesem Berechungsergebnis wird unter weiterer Berücksichtigung der dynamischen Kriterien die effektive Masse $m_{eff}$ gemäß der Beziehung

$$m_{eff} = f_{dyn} \times m_0$$

ermittelt. Dieser effektive Massenparameter wird im weiteren Ablauf des Verfahrens verwendet. Ebenso ist es aber auch möglich, ohne Abgleich der Masse unter Berücksichtigung dynamischer Kriterien die direkt bestimmte Masse $m_0$ als Kriterium bei den nachfolgenden Entscheidungen zu verwenden.

Als nächstes wird bestimmt, ob die effektive Masse $m_{eff}$ in einem Massenfenster zwischen 5 kg und 20 kg liegt. Ist dies nicht der Fall, so wird entschieden, dass ein Fußgängerschutz nicht aktiviert wird ("nicht feuern")

Liegt hingegen die effektive Masse in dem vorgegebenen Intervall, so wird bestimmt, ob die Intrusionsgeschwindigkeit in einem vorgegebenen Geschwindigkeitsfenster zwischen 20 km/h und 60 km/h liegt. Ist die Intrusionsgeschwindigkeit kleiner als 20 km/h beziehungsweise größer als 60 km/h, so wird der Fußgängerschutz nicht aktiviert. Liegt die Intrusionsgeschwindigkeit innerhalb des vorgegebenen Geschwindigkeitsfensters, so kann noch geprüft werden, mit welcher Wahrscheinlichkeit es sich unter Berücksichtigung der bereitgestellten dynamischen Kriterien beispielsweise um einen Fußgänger handelt.

Handelt es sich nicht um einen Fußgänger, so kann der Fußgängerschutz nicht ausgelöst werden.

Wird aber bestimmt, dass der Aufprall durch einen Fußgänger bewirkt wurde, so wird eine Aktivierung des Fußgängerschutzes veranlasst. Grundsätzlich ist eine Entscheidung allein auf der Grundlage des Massenparameters und der Intrusionsgeschwindigkeit in den meisten Fällen ausreichend.

Im Anschluss an eine positive Entscheidung wird noch auf der Grundlage eines Vergleichs der Sensoranzahl und der Anzahl der Hauptmaxima ermittelt, ob der Aufprall mit großer Wahrscheinlichkeit durch ein anderes Objekt als durch das vorgegebene Objekt, beispielsweise durch einen Fußgänger, bewirkt wurde. Wurde der Aufprall durch ein anderes Objekt bewirkt, so wird das Fußgängerschutzsystem nicht aktiviert. Wird jedoch ermittelt, dass es sich mit großer Wahrscheinlichkeit nicht um ein anderes Objekt handelt, so wird der Fußgängerschutz aktiviert.

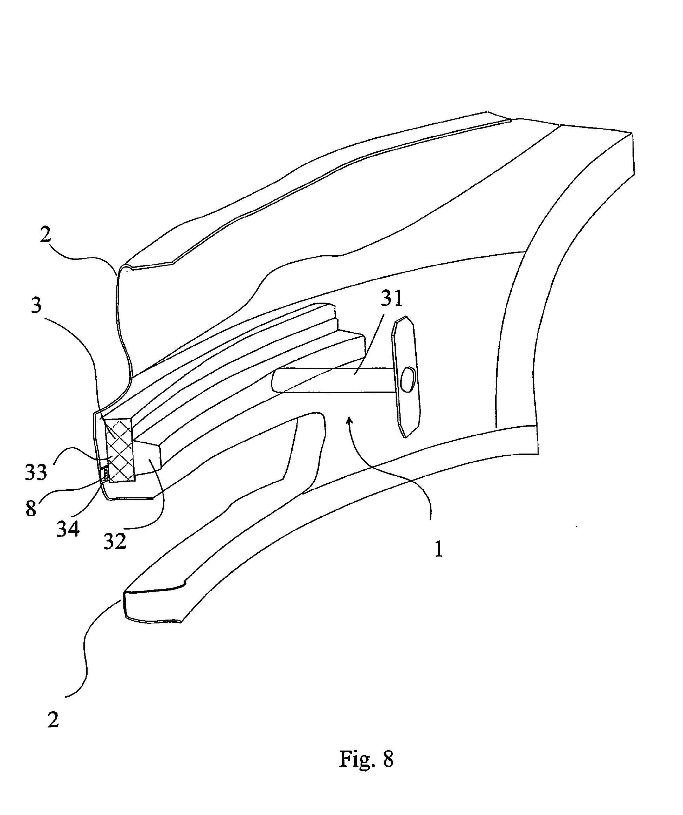

Figur 8 zeigt eine Ansicht auf das vordere Ende eines Kraftfahrzeugs zur Erläuterung der Anordnung von Sensoranordnungen, wie einem Sensorband 8. Auf einer tragenden Struktur 1, die aus einem Längsträger 31 und einem Querträger 32 besteht, ist ein elastischer Schaum 33 als energieabsorbierendes Teil 3 angeordnet. Dieser Schaum 33 hat beispielsweise eine Dicke von 60 bis 70 mm. In einem Hohlraum oder einer Nut im Schaum 33 ist das Sensorband 8 mit den optischen Fasersensoren eingelegt. Damit das Sensorband 8 sich ungehindert verformen kann, muss gewährleistet sein, dass das Sensorband in der Messrichtung frei beweglich ist. Zugspannungen auf dem Sensorband können die Lichtwellenleiter der optischen Fasersensoren beschädigen. Sollte es zu Rissen im Mantel des Lichtwellenleiters kommen, ändern sich die optischen Eigenschaften des Mantels. Im Rissbereich kann eine lichtabsorbierende Zone entstehen, was dazu führt, dass mehr Licht absorbiert wird, als der tatsächlichen Verformung entsprechen würde. Somit registriert der Sensor eine größere Verformung oder größere Intrusion. Da die Anrisspunkte an beliebigen Stellen des Lichtwellenleiters auftreten können, kann sich somit die gesamte Aufprallcharakteristik verändern und es könnte zu Fehlauslösungen des Fußgängerschutzsystems kommen. Aus diesem Grund ist jegliche Beschädigung des Sensors zu vermeiden. Der Sensor oder das Sensorband müssen jede Verformung mitmachen. Das Trägermaterial des Sensorbands besteht dazu aus elastischem Material, vorzugsweise aus einem Federstahl. Das Sensorband 8 ist im Normalbetrieb des Fahrzeugs keinen Umgebungseinflüssen ausgesetzt, da es hinter der Außenverkleidung des Fahrzeugs, in dem Fall von Fig. 8 also hinter einem Stossfänger 2 liegt.

Der Stossfänger kann als Kunststoffaußenhaut angesehen werden, die eine Dicke von beispielsweise 2 bis 3 mm aufweisen kann. Diese Kunststoffaußenhaut deformiert sich bei einem Aufprall mit einem Objekt, ohne zu splittern oder zu brechen.

Das Sensorband mit seiner schwimmenden Lagerung in einem Hohlraum oder einer Nut des Schaums 33 übernimmt somit alle Verformungen , welche über diese Kunststoffaußenhaut auf den Schaum 33 einwirken.

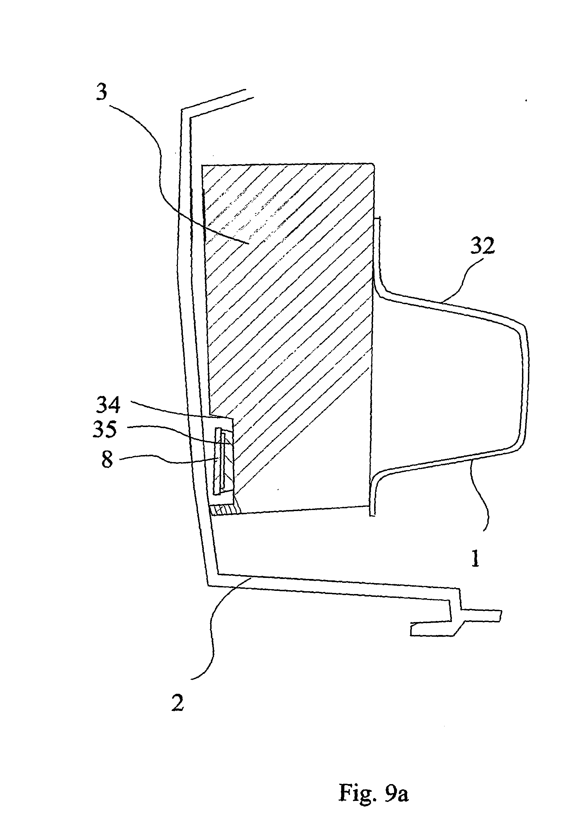

Figur 9a zeigt einen Schnitt durch einen Schaum 33 mit dem Sensorband und dessen Befestigung nach einem ersten Ausführungsbeispiel. Der für die Deformation benötigte Deformationsweg wird durch einen auf einem Querträger 32 angeordneten Schaum 33 zur Verfügung gestellt. Dieser Deformationsweg ist für den Schutz des Fußgängers erforderlich. Der Schaum 33 wird dazu verwendet, das Sensorband 8 so anzubringen, dass eine Beschädigung desselben während des Aufpralls vermieden werden kann. Dazu wird eine Nut 34 im Schaum vorgesehen. In der Nut 34 wird eine Klebeschicht 35 aufgetragen. Die Klebeschicht nimmt die beim Aufprall auftretende Scherung auf, wodurch das Sensorband 8 selbst keinen Scherkräften mehr ausgesetzt ist. Wird eine bestimmte Scherung überschritten und übersteigt dieser Wert einen durch die Bindungskräfte des Klebematerials bestimmten Schwellenwert, bildet sich im Kleber eine Art Sollbruchstelle aus. Das Sensorband 8 wird dadurch vom Schaum 33 entkoppelt.

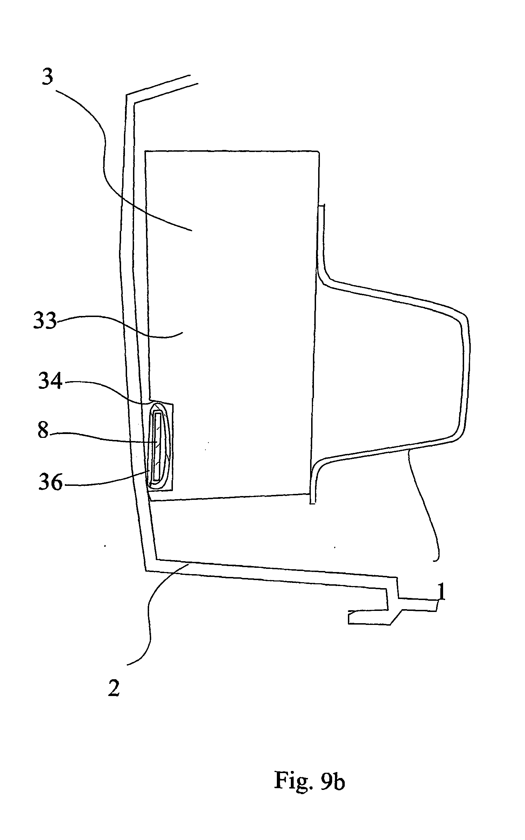

Fig. 9b zeigt ein weiteres Ausführungsbeispiel für die Befestigung eines Sensorbandes 8 an einem Schaum 33. Das Sensorband liegt in einer Nut 34 des Schaums 33, und wird in einem Kunststoffmantel, einer sogenannten Tülle 36, aufgenommen.

Die Tülle umschließt das Sensorband und kann entweder aus elastischem Material bestehen, sodass das Sensorband durch die Elastizität des Materials in der Tülle gehalten wird oder den Sensor mittels eines Klebers in der Tülle hält. Durch die Elastizität des Materials ist gewährleistet, dass das Sensorband nur Scherkräften ausgesetzt wird, die unter dem Schwellenwert nach Fig. 9a liegen. Anstatt der Verwendung eines elastischen Materials für die Tülle kann sie oder das Sensorband mit einer Klebeschicht nach dem in Fig. 9a dargestellten Ausführungsbeispiel versehen werden. Eine derartige Tülle kann beispielsweise aus Polypropylen oder EPDM bestehen. Um das Sensorband mit der Tülle zu ummanteln, wird das Sensorband durch die Tülle hindurchgezogen. Dazu ist ein Zugelement, wie ein Zugseil oder dergleichen bei der Herstellung in die Tülle eingelegt. Das Zugelement ist mit Schnappelementen oder anderen Halteelementen ausgestattet, welche ein Ende des Sensorbandes aufnehmen können. Das Zugelement wird mit der Tülle am Schaum 33 montiert. Das bedeutet, dass die Tülle mit dem Schaum 33 verklebt, verklemmt oder verschäumt werden kann.

Die Tülle 36 selbst wird in diesem Ausführungsbeispiel in die Nut eingeklebt.

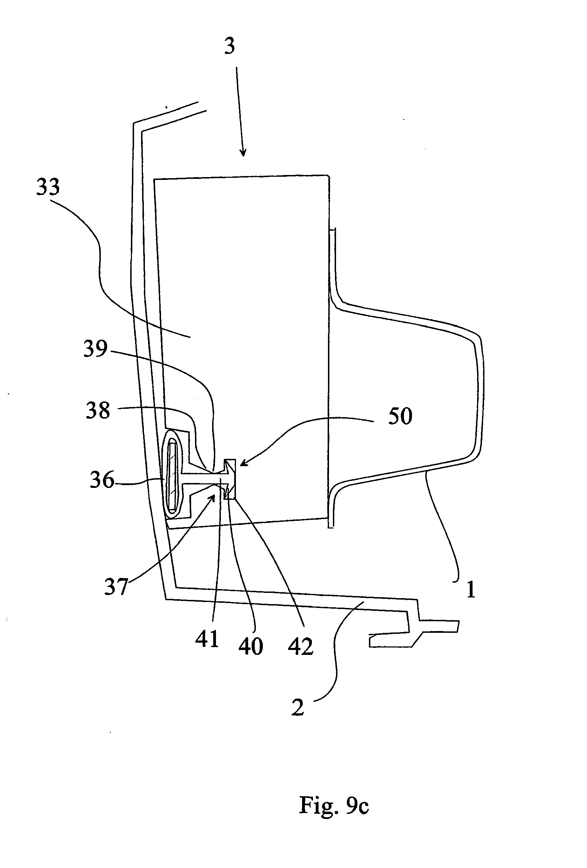

Fig. 9c ist ein weiteres Ausführungsbeispiel für die Befestigung des Sensorbandes 8 im Schaum 33. Der Schaum 33 weist dazu eine Nut 34 mit einem Kanal 37 auf, dessen Querschnitt veränderlich ist. Die Nut 34 hat entweder trapezförmigen oder rechteckigen Querschnitt. In diese Nut wird das Sensorband mit seiner Tülle eingepaßt. Der Nutgrund 38 enthält ein Ende des Kanals 37. Der Kanal weist vorzugsweise konisch zulaufende Wände 38 auf, die bis zu einem Minimalquerschnitt 39 zusammenlaufen. Wenn man in Richtung Kanalgrund weiterschreitet, erweitert sich der Querschnitt wieder. In dem erweiterten Querschnitt wird ein Vorsprung 40 eines mit der Tülle verbundenen Stiftes 41 aufgenommen. Da der Stift und der Vorsprung 40 zusammen einen Querschnitt aufweisen, welcher den Minimalquerschnitt 39 übersteigt, haftet jeder Stift in dem Bereich des erweiterten Querschnitts 42 des Kanals 37.

Die Tülle, welche mit dem Stift verbunden ist, und auch aus demselben Material bestehen kann, wird somit in den Kanal 37 der Nut hineingesteckt, sodass sich eine Steckverbindung 50 ausbildet. In Richtung der Längsachse des Sensorbandes können sich die Stifte zumindest abschnittsweise unter dem Einfluß der Verformung durch einen Aufprall bewegen. Durch die Steckverbindung 50 sind Tülle und Stifte aber gegenüber dem Schaum genau positioniert.

Anstatt eines Kanals 37 können auch eine Serie von Öffnungen vorgesehen werden. Die Öffnungen sind als Langlöcher ausgebildet, welche einen dem Kanal 37 entsprechenden Querschnitt aufweisen.

Grundsätzlich kann die Tülle auch in den Schaum mit eingeschäumt werden. Durch das in die Tülle eingelegte Zugelement bleibt der Querschnitt der Tülle erhalten, wenn das Zugelement einen dem Sensorband entsprechenden Querschnitt aufweist.

Nachträglich können die beiden Enden der Tülle 36 verschweißt oder verklebt werden, um einen besseren Schutz gegen Umwelteinflüsse zu bieten.

Dieselben Prinzipien für die Befestigung lassen sich auch auf Sensorbänder übertragen, die nicht über die gesamte Fahrzeugbreite angeordnet sind, sondern nur örtlich in energieabsorbierenden Teilen 3 angeordnet sind, wie in Fig. 1 dargestellt wird.

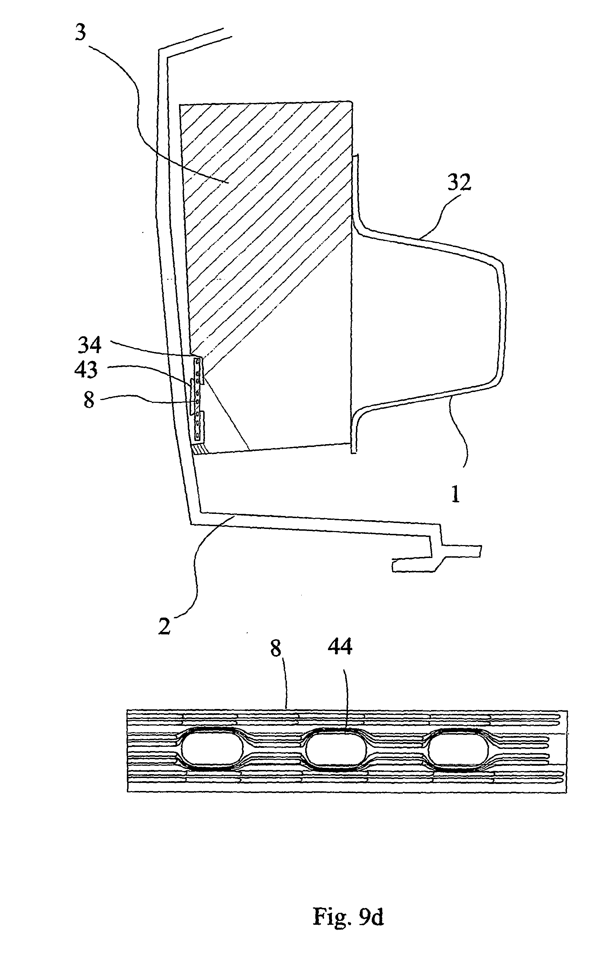

In einem in Fig. 9d dargestellten Ausführungsbeispiel enthält die Nut 34 Noppen. Diese Noppen greifen in Langlöcher 44 ein, welche an der Sensoranordnung 8 angebracht sind. Diese Langlöcher 44 werden in nicht sensierenden Bereichen der Sensoranordnung angebracht. Durch die Langlöcher im nichtsensierenden Bereich erfolgt ein Ausgleich der Scherkräfte.

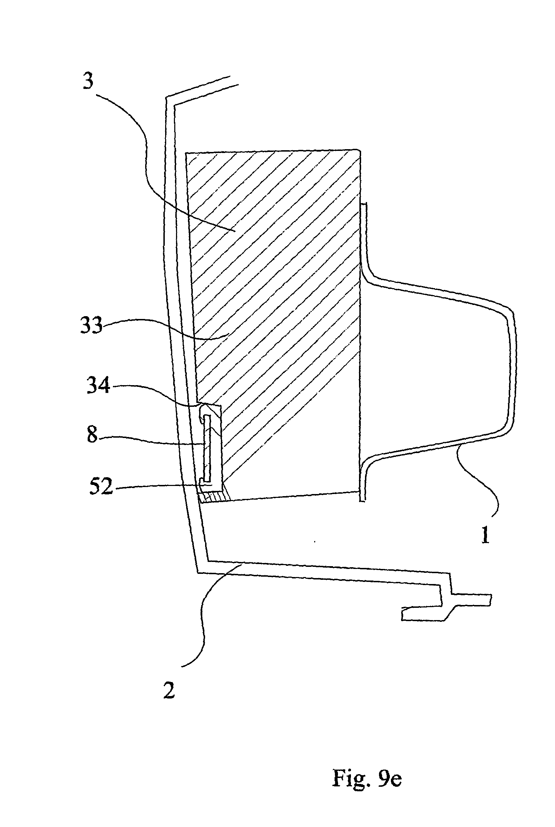

In Fig. 9e wird unter dem Sensor ein noch weicherer Schaum als Weichschaumschicht 52 als zusätzliche Deformationsschicht eingefügt, um Druckeffekte zu verhindern. Somit kann als Schaum für das energieabsorbierende Teil 3 auch ein Hartschaum, wie beispielsweise ein Schaum aus expandierten Polypropylen-Partikeln, ein sogenannter EPP-Schaum verwendet werden.

Der weiche Schaum ist in Bereichen um den Sensor angeordnet, beispielsweise als Umhüllung der Tülle oder als Klemmelement zwischen Hartschaum und Sensor.

Versuchsbeispiel für den Aufbau einer faseroptischen Sensoranordnung und die mit Hilfe derselben generierten Messwerte:

Der faseroptische Sensor beruht auf dem Prinzip der Mikrobiegung. Das komplette Sensorband besteht aus 8 Sensorpaaren, die über eine Länge von 48 cm verteilt sind. Jedes Sensorpaar besitzt zwei Sensoren, die in Schleifen auf den gegenüberliegenden Seiten eines Metallbandes aufgebracht sind. Diese Schleifen liegen in einem 45° Winkel zur Längsachse des Sensorbandes und überschneiden sich. Der Sensor ist über beinahe der gesamten Sensorlänge aktiv. Diese Zonen befinden sich dabei bei beiden Sensoren eines Paares einmal auf der Ober- und einmal auf der Unterseite des Lichtwellenleiter. Ein derartiger Lichtwellenleiter besteht in einem Ausführungsbeispiel aus Polymethylmethacrylat (PMMA) mit einem Durchmesser von nicht mehr als 0,5 mm.

Die Lichtsignale werden in einem opto-elektronischen Wandler in Spannungssignale umgewandelt, welche in der Datenaufzeichnungseinheit aufgezeichnet werden.

Durch die 45° Anordnung der Sensorschleifen misst jeder Sensor die Torsion und die Biegung in den entsprechenden sensitiven Bereichen. Aufgrund der unterschiedlichen Positionen der lichtdurchlässigen Bereiche der Sensoren (Ober- bzw. Unterseite) können die Spannungsanteile, die durch Torsion und Biegung verursacht werden, ausgerechnet werden. Der theoretische Ansatz lautet wie folgt:

$$V1 = a11\beta c + a21\tau c \qquad V1: \text{Ausgangsspannung Sensor 1}$$

$$V2 = a12\beta c + a22\tau\tau c \qquad V2: \text{Ausgangsspannung Sensor 2}$$

aij: Kalibrierungs-Koeffizienten
βc: reine Biegung
τc: reine Torsion

Die Biegung und die Torsion lassen sich dann folgendermaßen aus den Spannungssignalen ableiten:

$$\beta = (a22 V1 - a21\,V2)/(a11\,a22 - a21\,a12) \qquad : \text{Biegung}$$

$$\tau = (a11 V2 - a12\,V1)/(a11\,a22 - a21\,a12) \qquad : \text{Torsion}$$

Bei einer reinen Biegung des faseroptischen Sensors erhöht sich das Spannungssignal des einen Sensors eines Sensorpaares und das des anderen verringert sich um denselben Betrag, da die beiden als Bestandteile eines Paares zwar derselben Beanspruchung unterlagen, aber sich ihre sensitiven Bereiche auf der Unterseite bzw. Oberseite des Sensorbandes befinden. Bei einer reinen Torsion hingegen lassen sich an beiden Sensoren eines Sensorpaares die gleichen Spannungsdifferenzen mit demselben Vorzeichen messen. Hieraus lässt sich folgern, dass alle Sensoren des faseroptischen Sensors dieselben Biegungs- und Torsions-Koeffizienten besitzen, nur mit unterschiedlichen Vorzeichen bei den Biegungs-Koeffizienten der Sensoren eines Paares.

$$\beta = (V1 - V2)/2a11$$

$$\tau = (V1 + V2)/2a22$$

Das Spannungssignal, das durch eine Biegung hervorgerufen wurde, ist dabei linear proportional zu der Biegung des Sensors. Dargestellt wird eine solche Biegung durch Winkelfunktionen, d.h. aus den Spannungssignalen eines Sensorpaares lässt sich der Winkel zum vorherigen Sensorpaar berechnen.

Der Winkel eines Sensorpaares zum vorherigen Paar unterliegt folgendem Verhältnis: 1V ≈ 118,8° (a11)

Über das Triangulationsverfahren lässt sich die Deformation bzw. die Eindrückung des Schaumstoffes mittels des faseroptischen Sensors berechnen.

Für die Berechnung der maximalen Eindrückung gilt:

$$D = h1 + h2 + h3 + ...$$

D: Deformationstiefe

sw: Sensorweite, in diesem Beispiel beträgt sw=0,06m

$D = sw(\sin\alpha + \sin(\alpha+\beta) + \sin(\alpha+\beta+\chi) + ...)$

$\alpha$: Winkel Sensorpaar1

$\beta$: Winkel Sensorpaar 2

$\chi$: Winkel Sensorpaar 3

Eine Biegung im Uhrzeigersinn wird dabei als positiv definiert und entgegen dem Uhrzeigersinn als negativ. Die Winkel der einzelnen Sensorpaare beziehen sich jeweils auf das vorherige Sensorpaar bzw. auf den Referenzpunkt beim Sensorpaar 1. Der Grad der Auflösung der Deformationsbestimmung ist dabei abhängig von der Sensorweite des Sensors. Unter Berücksichtigung des zeitlichen Verlaufs der Deformation kann die Deformationsgeschwindigkeit berechnet werden, die eine zeitlich frühere Aussage über den Objektimpuls liefert.

Aufgrund der Eigenschaften des Sensors können nur Objekte korrekt abgebildet werden, deren Durchmesser folgende Bedingung erfüllt: D> 4sw / π mit der Sensorweite (sw).

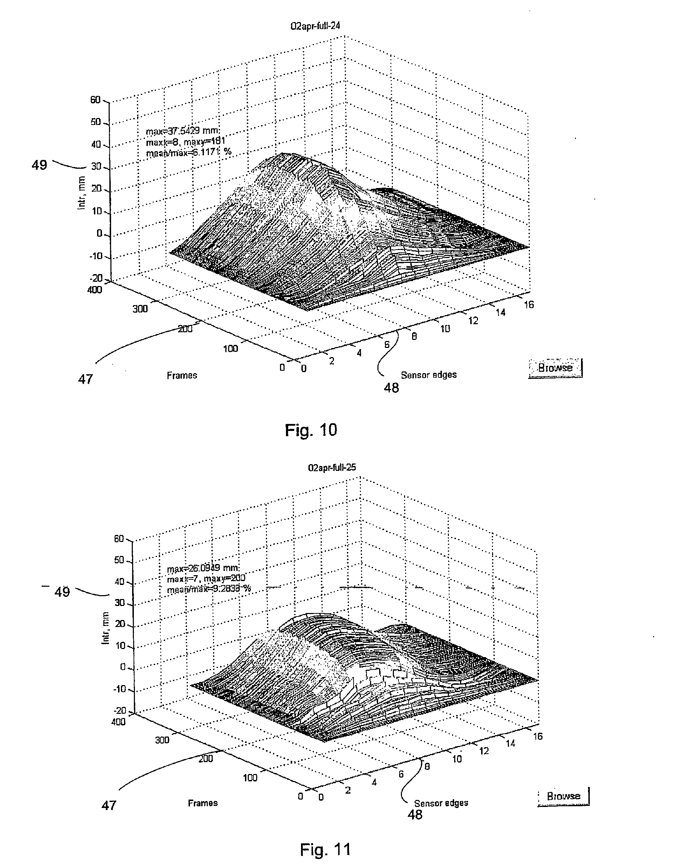

Fig. 10 zeigt eine Darstellung der gemessenen Deformationswerte eines Beispiels für einen Pfahlaufprall. Dabei ist die Achse 47 eine Zeitachse, die Achse 48 dient der Angabe der Position der Sensoren und die Achse 49 gibt die Werte für die Intrusion, also die Deformationswerte an.

Fig. 11 zeigt eine Darstellung der gemessenen Deformationswerte eines Beispiels für einen sogenannten Lower Leg Aufprall, also der Simulation des Aufpralls eines Beins eines Fußgängers auf eine Fahzeugaußenverkleidung.

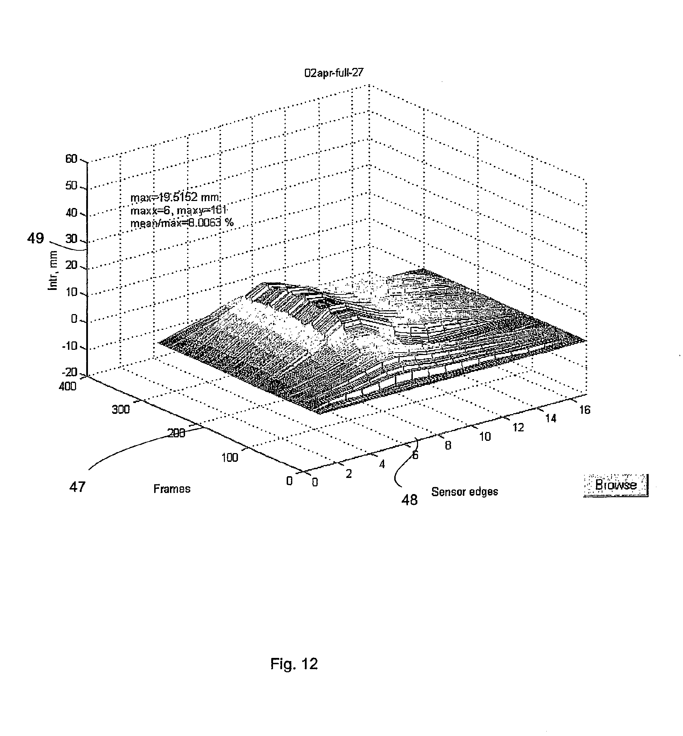

Fig. 12 zeigt eine Darstellung der gemessenen Deformationswerte für einen Rechteckaufprall.

Fig. 13 zeigt die Auswertung eines Versuchs, bei welchem der Verlauf eines Aufpralls mittels einer Anordnung von faseroptischen Sensoren gemessen wurde. Als die den Aufprall charakterisierende Größe wird die Intrusion bzw. die Intrusionsgeschwindigkeit gewählt. Die dargestellte Graphik gibt den Verlauf der Intrusion über der Dauer des Aufpralls (ms) und dem Messort an. Der Messort ist einer der 16 Sensoren. Bei dem in Fig. 13 dargestellten Ergebnis handelt es sich um einen Pfahlanprall, wobei die Aufprallgeschwindigkeit 20 km/h beträgt. Der Durchmesser des Pfahls beträgt 35 bis 40 mm. Der Aufprall erfolgt mittig, also im Bereich der Sensoren S08 und S09. Die Sensoren sind in im wesentlichen gleichem Abstand voneinander auf dem Sensorband über der gesamten Breite des Fahrzeugs in einem crashabsorbierenden Bereich, wie einem Schaum, angeordnet. Der Aufprall führt zu einer Verformung und für jeden Sensor zu einem Anteil an ausgekoppeltem Licht, welches einem Wert für die Deformation entspricht. Der den Sensor passierende Lichtstrahl wird in seiner Intensität mit dem Lichtstrahl der Lichtquelle verglichen und in einem optischelektrischen Wandler als Spannungssignal ausgegeben. Mittels eines Algorithmus wird jedem Spannungssignal ein Wert für die Deformation, also die Intrusion zugeordnet.

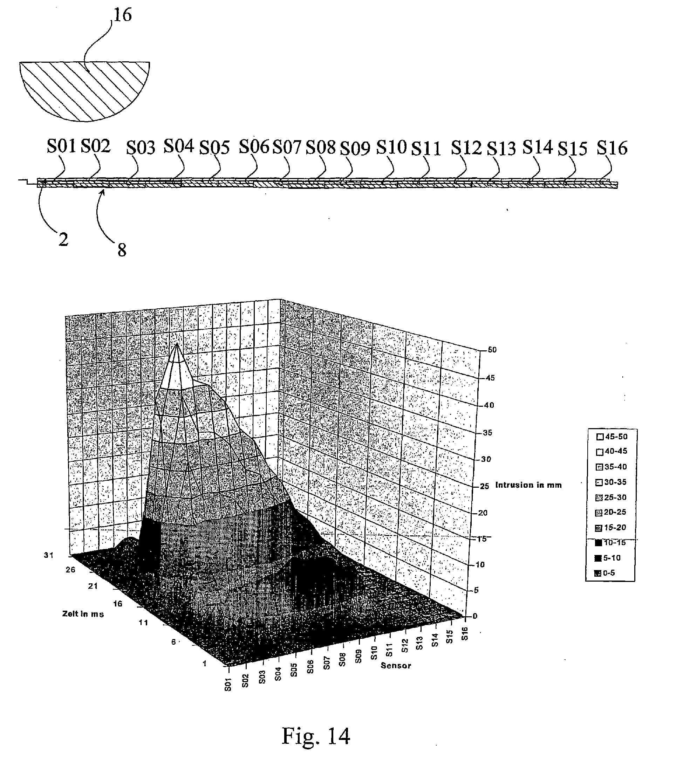

Fig. 14 ist eine Darstellung eines Versuchs, bei welchem ein Pfahl mit einer Geschwindigkeit von 20 km/h auf die Sensoren S01 und S02 aufprallt.

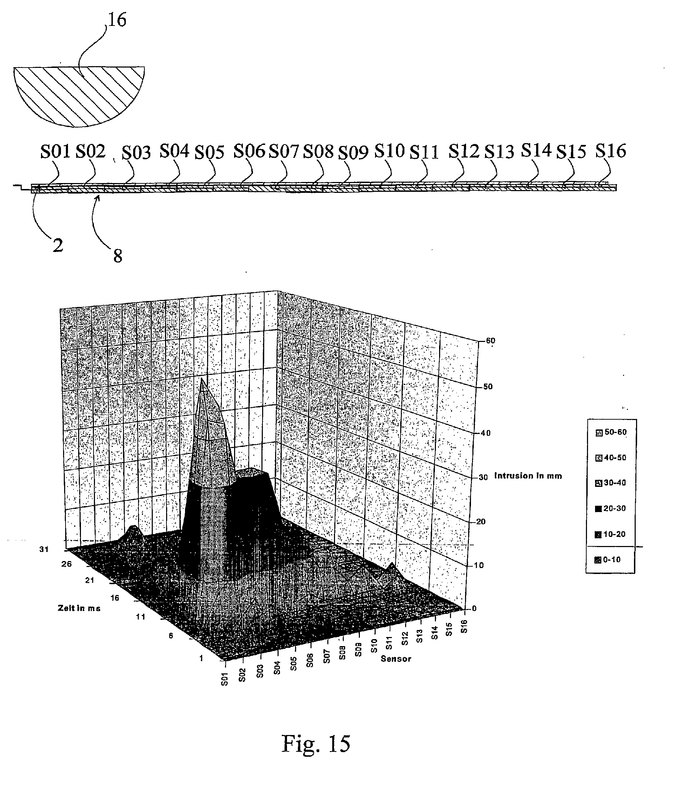

Fig. 15 ist eine Darstellung eines Versuchs, bei welchem ein Pfahl mit einer Geschwindigkeit von 40 km/h auf die Sensoren S01 und S02 aufprallt.

Der Pfahldurchmesser beträgt dabei 50 bis 60 mm.

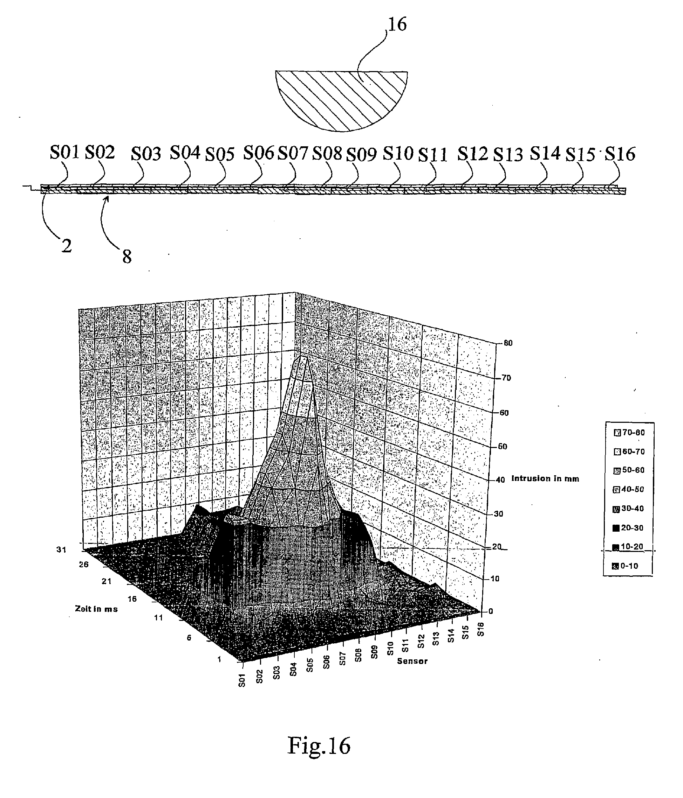

Fig. 16 ist eine Darstellung eines Versuchs, bei welchem ein Pfahl mit einer Geschwindigkeit von 40 km/h auf die Sensoren S08 und S09 aufprallt.

Der Pfahldurchmesser beträgt dabei 50 bis 60 mm.

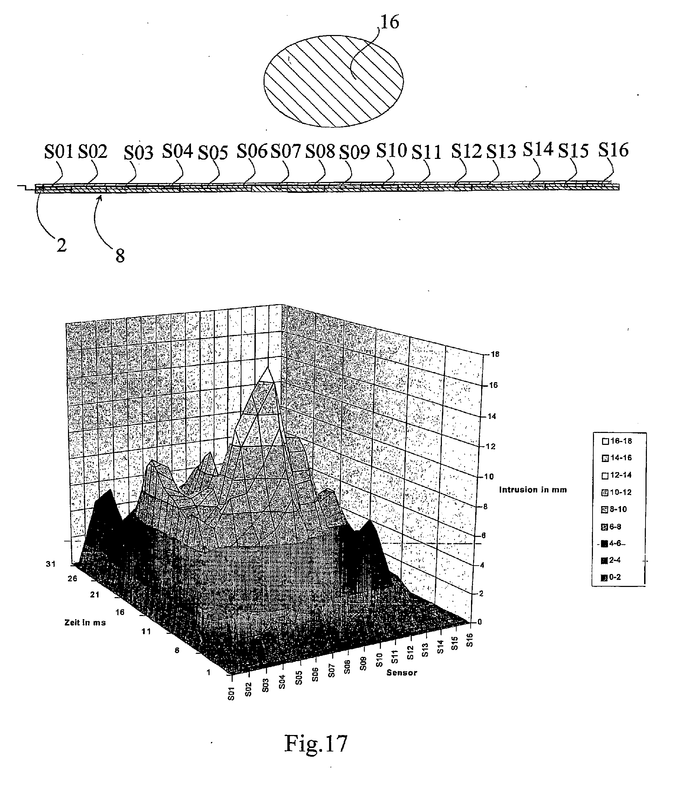

Fig. 17 ist eine Darstellung eines Versuchs, bei welchem ein Versuchskörper, welcher seinem Gewicht, seinen Abmessungen und mechanischen Eigenschaften einem menschlichen Unterschenkel entspricht, mit einer Geschwindigkeit von 20 km/h auf die Sensoren S08 und S09 aufprallt.

Der Durchmesser des Versuchskörpers beträgt dabei 35 bis 40 mm.

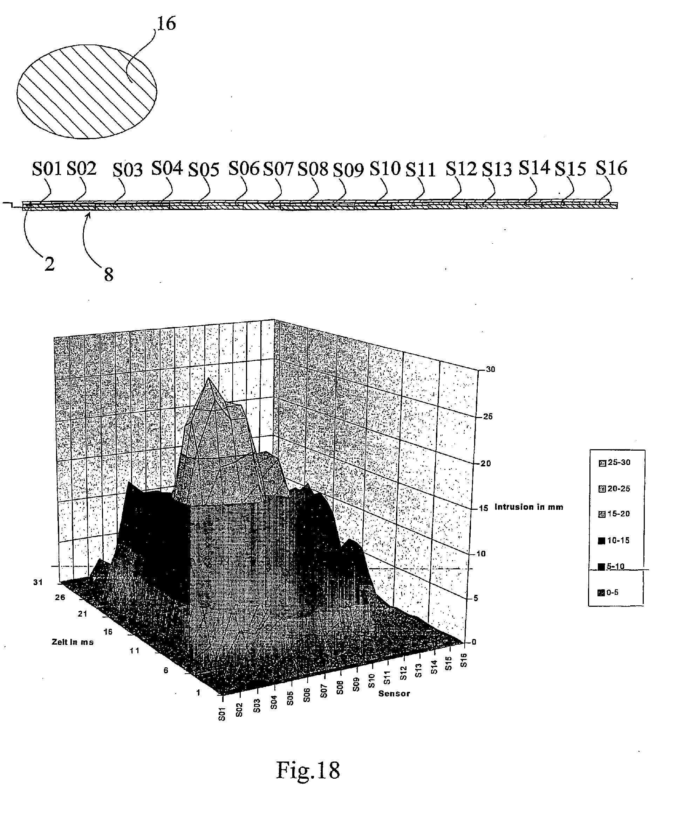

Fig. 18 ist eine Darstellung eines Versuchs, bei welchem ein Versuchskörper, welcher seinem Gewicht, seinen Abmessungen und mechanischen Eigenschaften einem menschlichen Unterschenkel oder Bein entspricht, mit einer Geschwindigkeit von 40 km/h auf die Sensoren S01 und S02 aufprallt.

Der Durchmesser des Versuchskörpers beträgt dabei 55 bis 65 mm.

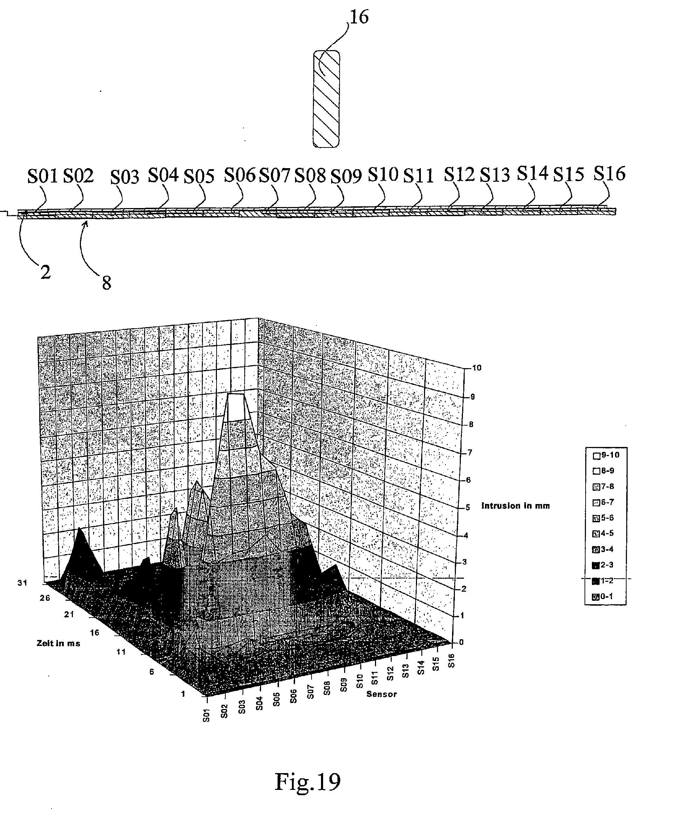

Fig. 19 ist eine Darstellung eines Versuchs, bei welchem ein Versuchskörper in Form einer Begrenzung der Fahrbahn (Baustellenbake) mit einer Geschwindigkeit von 20 km/h auf die Sensoren S08 und S09 aufprallt. Die maximal gemessene Intrusion beträgt 13,1 mm.

Die Breite des Begrenzungskörpers beträgt dabei 30 bis 50 mm, die Länge 100 bis 200 mm, die Höhe entspricht mindestens der Höhe des oberen Stossfängerbereichs.

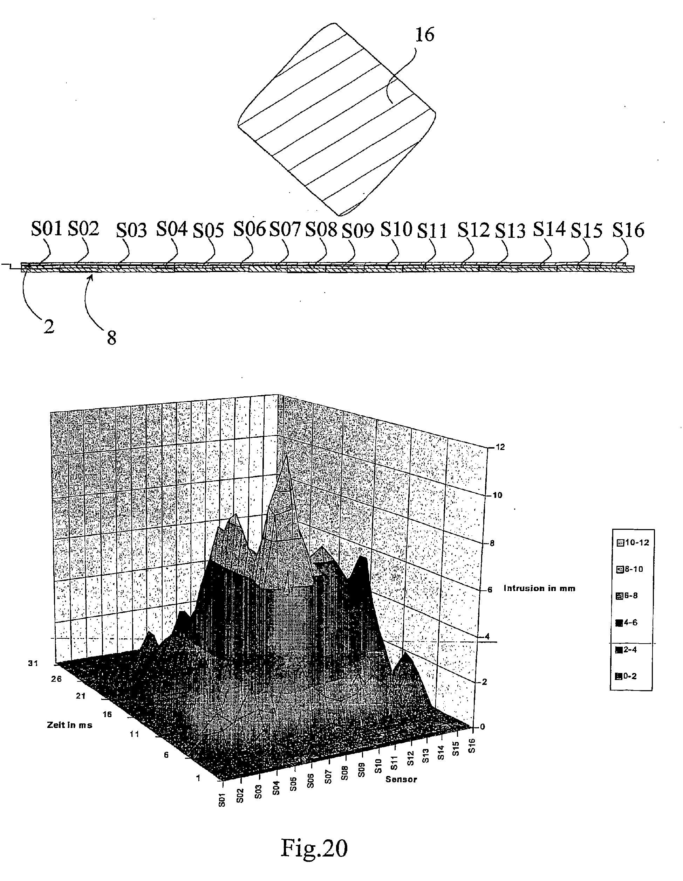

Fig. 20 ist eine Darstellung eines Versuchs, bei welchem ein Versuchskörper in Form einer Mülltonne mit einer Geschwindigkeit von 20 km/h auf die Sensoren S08 und S09 aufprallt. Die maximal gemessene Intrusion beträgt 20,6 mm.

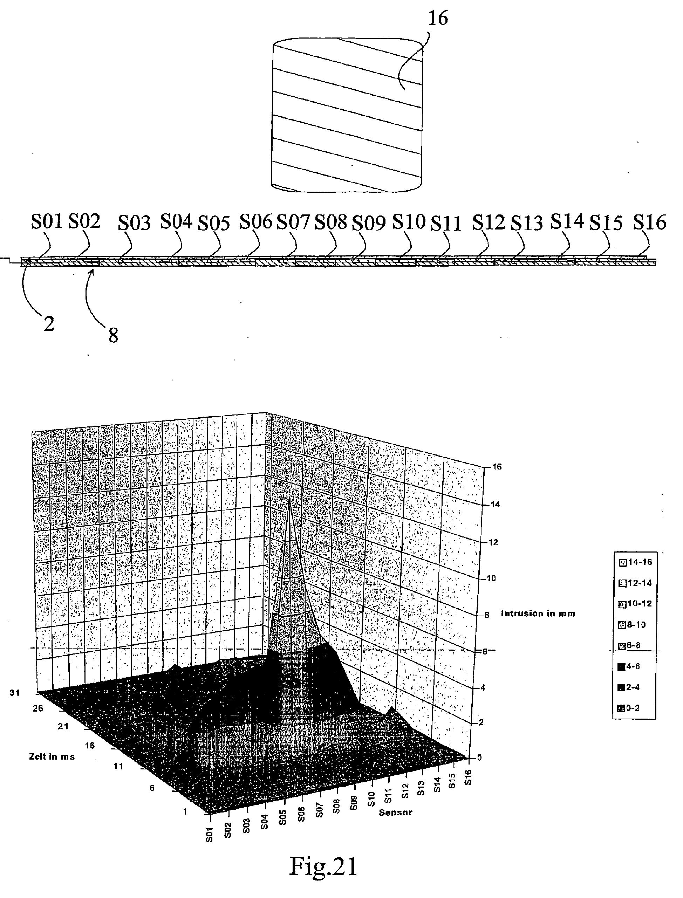

Die Breite und Länge der Mülltonne betragen dabei zwischen 400 und 500 mm, die Höhe 900 mm. In dem Versuch wurde die Mülltonne an einer Kante angefahren, die

im Bereich der Sensoren S08 und S09 liegt. Wird dieselbe Mülltonne im Bereich der Sensoren S08 und S09 unter einem anderen Winkel angefahren, ergibt sich das in Fig. 21 dargestellte Bild.

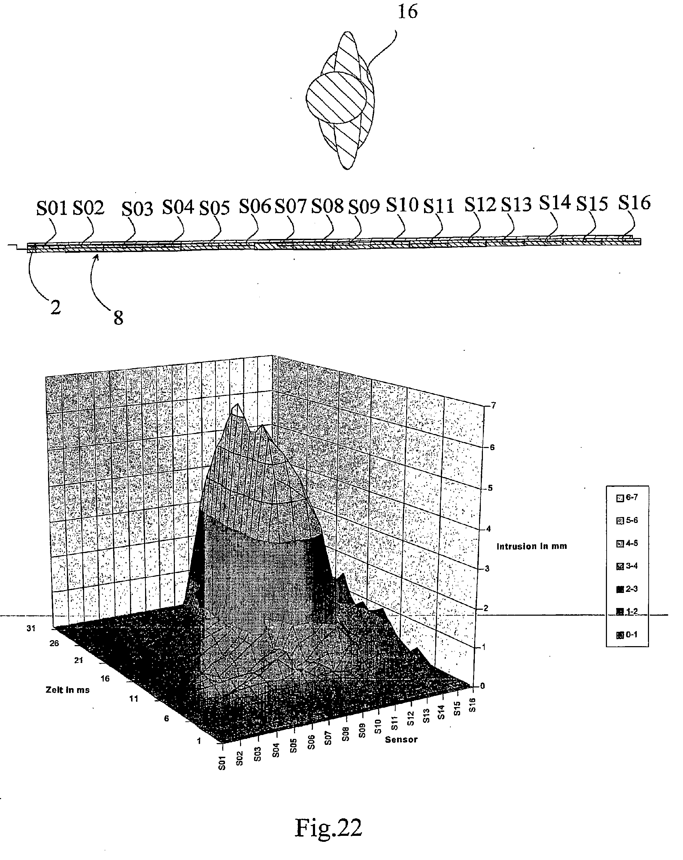

Fig. 22 ist eine Darstellung eines Versuchs, bei welchem das Fahrzeug auf ein Dummy mit einer Geschwindigkeit von 15 km/h auf die Sensoren S08 und S09 aufprallt. Die maximal gemessene Intrusion beträgt 7 mm. Das Dummy entspricht in seinen Abmessungen und mechanischen Eigenschaften einem Kind von 6 Jahren.

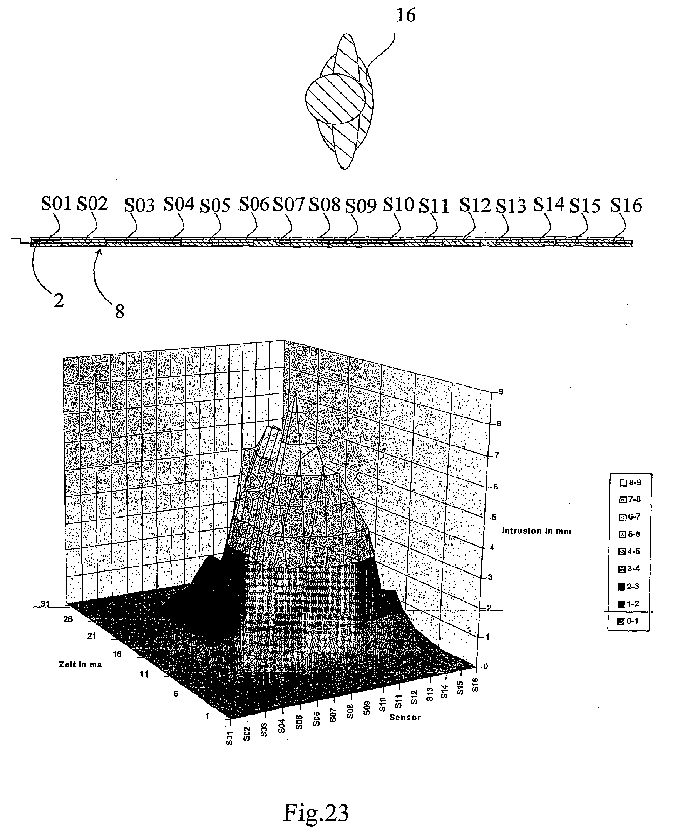

Fig. 23 ist eine Darstellung eines Versuchs, bei welchem das Fahrzeug auf ein Dummy mit einer Geschwindigkeit von 20 km/h auf die Sensoren S08 und S09 aufprallt. Die maximal gemessene Intrusion beträgt 9,5 mm. Die Versuche zeigen deutlich, dass sich der Aufprall für verschiedene Versuchskörper oder Dummies klar voneinander unterscheiden lässt. Somit stellt dieses Verfahren zum Erkennen einer Aufprallsituation, ein sicheres Kriterium zur Auslösung eines Fußgängerschutzsystems nur bei vorliegen eines Zusammenstosses mit einem Fußgänger oder Zweiradfahrer bei einer Geschwindigkeit von 20-60 km/h dar.

Bezugszeichenliste

1. tragende Struktur
2. Stossfänger
3. Energieabsorbierendes Teil
4. Verbindungselement
5. Längsträger
6. Aufnahmeelement
7. Aufhängung
8. Sensorband
9. Umwandlungseinheit
10. Zentraleinheit
11. Regeleinheit
12. Aktuator

13. Ausnehmung
14. Hohlraum
15. Frontspoiler
16. Objekt
17. Lichtstrahl
18. lichtabsorbierender Bereich
19. Sensor
20. Sensorabschnitt
21. Lichtquelle
22. Detektor
23. Detektor
24. Trägermaterial
25. optischer Fasersensor
26. optischer Fasersensor
27. Begrenzung zum lichtabsorbierenden Bereich
28. Ende des Lichtwellenleiters
29. Ende des Lichtwellenleiters
30. Verstärker
31. Längsträger
32. Querträger
33. Schaum
34. Nut
35. Klebeschicht
36. Kunststoffmantel (Tülle)
37. Kanal
38. Nutgrund
39. Minimalquerschnitt
40. Vorsprung
41. Stift
42. erweiterter Kanalquerschnitt
43. Hochpass-Filtereinheit
44. Subsampling-Einheit
45. Kalibrierungseinheit
46. Prozessoreinheit
47. Zeitachse
48. Position der Sensoren
49. Wertachse für Deformationswerte
50. Steckverbindung
51. Klemmelement
52. Weichschaumschicht

**Patentansprüche**

1. Befestigungssystem mit einer im Frontbereich eines Fahrzeugs angeordneten Sensoranordnung (8), welche die Deformationen eines im Frontbereich des Fahrzeugs angeordneten energieabsorbierenden Teils (3) aufnimmt, die während eines Aufpralls des Fahrzeugs auf ein Objekt (16) entstehen,
**dadurch gekennzeichnet, dass** die Sensoranordnung (8) so in das energieabsorbierende Teil (3) integriert ist, dass sie die Verformungen des energieabsorbierenden Teils (3) bis zu einem Schwellenwert unbehindert von Scher-, Druck- oder Zugkräften, die zu einer Veränderung der sensitiven Bereiche der Sensoranordnung (8) oder gar zu einer Zerstörung der Sensoranordnung (8) führen, mit ausführt.

2. Befestigungssystem nach Anspruch 1,
**dadurch gekennzeichnet, dass** die Sensoranordnung (8) in eine Nut (34), eine Ausnehmung (13) und/oder einen Hohlraum (14) eingelegt ist.

3. Befestigungssystem nach Anspruch 1,
**gekennzeichnet dadurch, dass** die Sensoranordnung (8) in eine Nut (34) des energieabsorbierenden Teils (3) eingeklebt ist, wobei die Nut (34) eine Klebeschicht (35) enthält, die Scherkräfte bis zu einem Schwellenwert aufnimmt, wobei die Klebeschicht (35) bei Scherkräften über einem Schwellenwert eine Sollbruchstelle ausbildet, wodurch der Sensor durch das Versagen der Klebeschicht (35) vom energieabsorbierenden Teil (3) entkoppelt wird.

**4.** Befestigungssystem nach Anspruch 1,
**gekennzeichnet dadurch, dass** die Sensoranordnung (8) beweglich in einer Tülle (36) angebracht ist.

**5.** Befestigungssystem nach Anspruch 4,
**gekennzeichnet dadurch, dass** die Tülle (36) in das energieabsorbierende Teil (3, 33) eingeschäumt ist, wobei das Material der Tülle (36) dem Material des energieabsorbierenden Teils (3, 33) im Wesentlichen entspricht.

**6.** Befestigungssystem nach Anspruch 4,
**gekennzeichnet dadurch, dass** die Tülle (36) auf das energieabsorbierende Teil (3, 33) geklebt wird.

**7.** Befestigungssystem nach Anspruch 4,
**gekennzeichnet dadurch dass** die Tülle mit dem energieabsorbierenden Teil (3, 33) durch eine Steckverbindung (50) verbunden ist.

**8.** Befestigungssystem nach Anspruch 7,
**gekennzeichnet dadurch, dass** die Steckverbindung (50) in einer Nut (34) des energieabsorbierenden Teils (3) angeordnet ist.

**9.** Befestigungssystem nach Anspruch 1,
**gekennzeichnet dadurch, dass** die Sensoranordnung (8) zumindest teilweise von einer Weichschaumschicht (52) umgeben ist.

**Claims**

**1.** A fastening system having a sensor array (8) disposed in the front area of a vehicle, which array absorbs the deformations of an energy-absorbing part (3) disposed in the front area of the vehicle that occur during an impact of the vehicle against an object (16),
**characterised in that** the sensor array (8) is integrated into the energy-absorbing part (3) so that it also performs the deformations of the energy-absorbing part (3) up to a threshold value unimpeded by shearing, pressure or tensile forces that result in a change in the sensitive areas of the sensor array (8) or even in the destruction of the sensor array (8).

**2.** A fastening system according to Claim 1,
**characterised in that** the sensor array (9) is inserted into a groove (34), a recess (13) and/or a cavity (14).

**3.** A fastening system according to Claim 1,
**characterised in that** the sensor array (8) is glued into a groove (34) in the energy-absorbing part (3), the groove (34) containing an adhesive layer (35) that absorbs the shearing forces up to a threshold value, the adhesive layer (35) forming a predetermined breaking point in the event of shearing forces above a threshold value, as a result of which the sensor is uncoupled from the energy-absorbing part (3) by the failure of the adhesive layer (35).

**4.** A fastening system according to Claim 1,
**characterised in that** the sensor array (8) is moveably mounted in a protective sleeve (36).

**5.** A fastening system according to Claim 4,
**characterised in that** the protective sleeve (36) is expanded into the energy-absorbing part (3, 33), the material of the protective sleeve (36) substantially corresponding to the material of the energy-absorbing part (3, 33).

**6.** A fastening system according to Claim 4,
**characterised in that** the protective sleeve (36) is bonded onto the energy-absorbing part (3, 33).

**7.** A fastening system according to Claim 4,
**characterised in that** the protective sleeve is connected to the energy-absorbing part (3, 33) by a plug-in connection (50).

8. A fastening system according to Claim 7,
**characterised in that** the plug-in connection (50) is disposed in a groove (34) of the energy-absorbing part (3).

9. A fastening system according to Claim 1,
**characterised in that** the sensor array (8) is surrounded at least partially by a layer of flexibly foam (52).

**Revendications**

1. Système de fixation comportant un dispositif de capteur (8) installé dans la zone frontale d'un véhicule et subissant les déformations d'une pièce (3) qui absorbe l'énergie et est installée dans la zone frontale du véhicule, cette énergie étant produite par la collision entre le véhicule et un objet (16),
**caractérisé en ce que**
le dispositif de capteur (8) est intégré dans la pièce (3) absorbant l'énergie pour participer aux déformations de cette pièce (3) jusqu'à une valeur de seuil, sans être gêné par des efforts de cisaillement de compression ou de traction qui conduisent à une variation des zones sensibles du dispositif de capteur (8) ou même à sa destruction.

2. Système de fixation selon la revendication 1,
**caractérisé en ce que**
le dispositif de capteur (8) est installé dans une rainure (34), une partie dégagée (13) et/ou une cavité (14).

3. Système de fixation selon la revendication 1,
**caractérisé en ce que**
le dispositif de capteur (8) est collé dans une rainure (34) de la pièce (3) absorbant l'énergie,
la rainure (34) comporte une couche de colle (35) qui absorbe les efforts de cisaillement jusqu'à une valeur de seuil,
la couche de colle (35) constituant un point de rupture de consigne pour des efforts de cisaillement qui dépassent cette valeur de seuil de façon à découpler le capteur par rapport à la pièce (3) absorbant l'énergie, par la défaillance de la couche de colle (35).

4. Système de fixation selon la revendication 1,
**caractérisé en ce que**
le dispositif de capteur (8) est logé de manière mobile dans une gaine (36).

5. Système de fixation selon la revendication 4,
**caractérisé en ce que**
la gaine (36) est réalisée par expansion dans la pièce (3, 33) absorbant l'énergie, la matière de la gaine (36) correspondant pour l'essentiel à celle de la pièce (3, 33) absorbant l'énergie.

6. Système de fixation selon la revendication 4,
**caractérisé en ce que**
la gaine (36) est collée sur la pièce (3, 33) absorbant l'énergie.

7. Système de fixation selon la revendication 4,
**caractérisé en ce que**
la gaine est reliée à la pièce (3, 33) absorbant l'énergie par une liaison par enfichage (50).

8. Système de fixation selon la revendication 7,
**caractérisé en ce que**
la liaison par enfichage (50) est prévue dans une rainure (34) de la pièce (3) absorbant l'énergie.

9. Système de fixation selon la revendication 1,
**caractérisé en ce que**
le dispositif de capteur (8) est entouré, au moins en partie, par une couche de mousse souple (52).

Fig. 1

EP 1 646 534 B1

Fig. 2

Schnitt A-A

Fig. 3

Fig.4

S01    S02    S03    S04    S05    S06

16

9

S01   S02   S03        S04   S05   S06

## Fig. 5a

S01

18                              16                    17

19

## Fig. 5b

**Fig. 6a**

**Fig. 6b**

**Fig. 6c**

Fig. 7

2

3

31

33

8

34 32

1

2

Fig. 8

Fig. 9a

Fig. 9b

Fig. 9c

Fig. 9d

Fig. 9e

02apr-full-24

max=37.5429 mm
maxx=8, maxy=181
mean/max=6.1171 %

49

Intr, mm

60
50
40
30
20
10
0
-10
-20
400

300

200

100

0   0

2

4

6

8

10

12

14

16

47

Frames

48

Sensor edges

Browse

Fig. 10

02apr-full-25

max=26.0949 mm
maxx=7, maxy=200
mean/max=9.2838 %

49

Intr, mm

60
50
40
30
20
10
0
-10
-20
400

300

200

100

0   0

2

4

6

8

10

12

14

16

47

Frames

48

Sensor edges

Browse

Fig. 11

02apr-full-27

max=19.5152 mm
maxx=6, maxy=181
mean/max=8.0063 %

Fig. 12

Fig. 13

Fig. 14

16

S01 S02   S03  S04 S05  S06 S07 S08 S09 S10 S11  S12 S13  S14 S15  S16

2

8

| | 50-60 |
| | 40-50 |
| | 30-40 |
| | 20-30 |
| | 10-20 |
| | 0-10 |

Intrusion in mm

60

50

40

30

20

10

0

31
26
21
16
11
6
1

Zeit in ms

S01 S02 S03 S04 S05 S06 S07 S08 S09 S10 S11 S12 S13 S14 S15 S16

Sensor

Fig. 15

Fig.16

Fig.17

Fig.18

Fig.19

Fig.20

Fig.21

16

S01 S02 S03 S04 S05 S06 S07 S08 S09 S10 S11 S12 S13 S14 S15 S16

2

8

Intrusion in mm

6-7
5-6
4-5
3-4
2-3
1-2
0-1

Zeit in ms

Sensor

Fig.22

16

S01 S02 S03 S04 S05 S06 S07 S08 S09 S10 S11 S12 S13 S14 S15 S16

2 8

Intrusion in mm

8-9
7-8
6-7
5-6
4-5
3-4
2-3
1-2
0-1

Zeit in ms

Sensor

Fig.23

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10145679 A1
- DE 4410895 A1
- DE 10113720 A1
- DE 10023588 A1
- DE 10085023 T1
- DE 10085025 T1
- US 6561301 B1